# EUROPEAN PATENT SPECIFICATION

(11) **EP 2 363 740 B1**
(45) Date of publication and mention of the grant of the patent: **28.03.2012**
(21) Application number: 11001458.6
(22) Date of filing: 22.02.2011
(51) Int. Cl.: G02B 21/16, G02B 21/36, G02B 21/00

(54) **Microscope apparatus and observation position reproduction method**
Mikroskopgerät und Verfahren zur Reproduktion der Beobachtungsposition
Appareil de microscope et procédé de reproduction de position d'observation

(30) Priority: 03.03.2010 JP 2010047179
(43) Date of publication of application: 07.09.2011
(73) Proprietor: Olympus Corporation, Shibuya-ku Tokyo 151-0072 (JP)
(72) Inventor: Yokomachi, Yuki, Tokyo 151-0072 (JP)
(74) Representative: Gunzelmann, Rainer

(56) References cited:
- DE-A1-102004 047 519
- US-A1- 2002 154 216
- US-A1- 2005 190 437
- US-A1- 2009 028 544

## Description

### Background of the Invention

### Field of the Invention

The present invention relates to a microscope apparatus having a function of reproducing an observation position of a sample.

### Description of the Related Art

Conventionally, position alignment (position reproduction) of an observation portion of a sample is performed with manual operations of a user in a microscope observation. The manual operations are performed, for example, as follows. Initially, a magnification is set to a low ratio, and a stage is moved, for example, by using a mark or the like provided in a view field of an eyepiece lens so that an observation portion of a sample is located at an approximate position (such as the center of an observation image). Similar operations are performed after switching the magnification to a high ratio next. In this way, the position alignment of the observation portion is performed. However, such position alignment performed with user manual operations has not only low operation efficiency due to a lot of troublesomeness but a large error and low position productivity.

Accordingly, in order to overcome such problems, microscope apparatuses having a stage position reproduction function have been developed. As one example of such microscope apparatuses, an electric stage microscope that includes a stage provided with a length measuring instrument using a magnetic scale, an optical scale and laser interference, and that has a function of grasping the amount of a move or the current position of the stage by feeding a signal from the length measuring instrument back to a control unit is cited.

However, such an electric stage microscope has a problem that an observation position cannot be reproduced due to a rotational shift and a different orientation of a sample depending on a position where the sample once removed from a stage is again put and fixed on the stage.

To overcome such a problem, Patent Document 1 (Japanese Laid-open Patent Publication No. 2004-205366) proposes a microscope apparatus for attaching a pattern such as a marker or the like to a sample itself, and for reproducing an observation position with high accuracy by recognizing a pattern image. With this microscope apparatus, a pattern with a high degree of visual identification is attached to a sample, position information is measured by recognition means for recognizing the pattern, and the sample is moved to a predetermined position by moving means based on the position information. With this microscope apparatus, even though a sample is once removed and reset, an observation position can be reproduced, and also a shift of a lens tube is not affected. Moreover, the microscope apparatus does not depend on a length measuring instrument, whereby the position reproduction can be performed even with a cost-effective apparatus.

However, the microscope apparatus proposed by Patent Document 1 has two problems of a position reproduction method. One of them is that a troublesome operation for attaching a pattern to a sample is needed. The other is that the pattern attached to the sample causes a rotational shift depending on a position where the sample is put, leading to difficulty in position reproduction.

### Summary of the Invention

In light of the above described circumstances, an object of the present invention is to provide a microscope apparatus and an observation position reproduction method, which can reproduce an observation position of a circular sample with high accuracy.

An apparatus in one aspect of the present invention is a microscope apparatus including an image capturing unit, a center position calculation unit, a recognition unit, a rotational shift angle calculation unit and a position reproduction unit. The image capturing unit captures an observation image. The center position calculation unit calculates coordinates of a center position of a circular sample based on an image of the circular sample, which is obtained by the image capturing unit. The recognition unit recognizes a pattern image of a predetermined area based on the coordinates of the center position, which are calculated by the center position calculation unit, from the image of the circular sample, which is obtained by the image capturing unit. The storage unit stores the pattern image recognized by the recognition unit. The rotational shift angle calculation unit calculates a rotational shift angle between a first pattern image and a second pattern image. Here, the first pattern image is a pattern image recognized by the recognition unit from an image of the circular sample, which is obtained by the image capturing unit in a first period. The second pattern image is a pattern image recognized by the recognition unit from an image of the circular sample, which is obtained by the image capturing unit in a second period later than the first period. The position reproduction unit corrects a rotational shift of the circular sample based on the rotational shift angle calculated by the rotational shift angle calculation unit, and reproduces a position of the circular sample in the first period.

### Brief Description of the Drawings

FIG. 1 schematically illustrates an entire configuration of a microscope apparatus according to an embodiment;
FIG. 2 is a flowchart illustrating operations of the microscope apparatus according to the embodiment;
FIG. 3 schematically illustrates one example of a GUI screen displayed on a display unit;
FIG. 4 is a graph of calculated characteristic data;
FIG. 5 is a flowchart illustrating details of an operation (S4) for calculating coordinates of a center position of a circular sample;
FIG. 6 is an explanatory view of an edge point detection process executed in S43;
FIG. 7 is an explanatory view of a center position coordinates calculation process executed in S44;
FIG. 8 is an explanatory view of an example of operations performed when edge points of a circular sample are manually detected;
FIG. 9 is an explanatory view of sample ID new registration made in S6;
FIG. 10 illustrates one example of an image of a predetermined area, which is recognized as a reference pattern image from an image of a bottom surface of the circular sample;
FIG. 11 is an explanatory view of a change of an origin;
FIG. 12 illustrates an example where XY coordinates of an observation position are represented with polar coordinates;
FIG. 13 illustrates one example of a GUI screen at a time point when an image at an observation position is obtained twice;
FIG. 14 illustrates a folder structure of images and information stored in a position reproduction information storage unit in association with a newly registered sample ID;
FIG. 15 illustrates a dialog displayed on a display unit when a user inputs a sample ID of a circular sample;
FIG. 16 illustrates an example of calculating a rotational shift angle by using pattern matching;
FIG. 17 schematically illustrates an entire configuration of a microscope apparatus according to a modification example 1;
FIG. 18 schematically illustrates an entire configuration of a microscope apparatus according to a modification example 2;
FIG. 19 is a flowchart illustrating operations according to a modification example 3;
FIG. 20 is an explanatory view of area detection when an area that does not rotate with a rotation of an XYZ θ electric microscope stage is detected from a live image in a modification example 4; and
FIG. 21 illustrates an example of calculating a rotational shift angle by using pattern matching according to a modification example 5.

### Description of the Preferred Embodiment

An embodiment according to the present invention is described below with reference to the drawings.

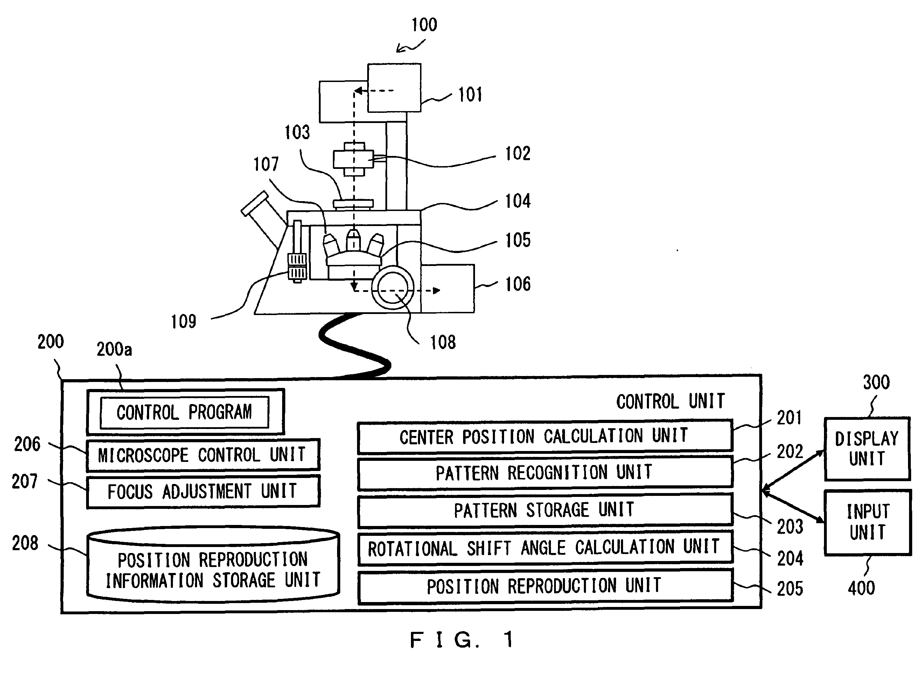

FIG. 1 schematically illustrates an entire configuration of a microscope apparatus according to the embodiment of the present invention.

As illustrated in this figure, the microscope apparatus according to this embodiment includes a microscope 100, a control unit 200, a display unit 300 and an input unit 400. The microscope 100, the display unit 300 and the input unit 400 are electrically connected to the control unit 200.

The microscope 100 is an inverted microscope including a light source 101, a condenser 102, an XYZ θ electric stage 104 on which a circular sample 103 is put, a revolver 105, an image capturing unit 106, objective lenses 107, a Z axis focus handle 108, and an XY θ handle 109.

This embodiment assumes the use of a culture dish (also called a schale, a petri dish or the like) used to culture live cells as the circular sample 103. Accordingly, this embodiment adopts, as the microscope 100, an inverted microscope normally used to observe a culture dish from the viewpoints of a WD (Working Distance) and a focal distance of an objective lens 107 and from a hygienic viewpoint. However, an erect microscope can be adopted as a matter of course.

The circular sample 103 is a culture dish made of, for example, polyethylene, glass or the like, and has a diameter of, for example, 35mm, 60mm or the like. However, the circular sample 103 is not limited to these materials and diameters. The circular sample 103 is set (put, fixed) on the XYZ θ electric stage 104. The circular sample 103 can be removed/set from/on the XYZ θ electric stage 104, and a user can set an arbitrary circular sample 103 on the XYZ θ electric stage 104.

The XYZ θ electric stage 104 can move in XY direction that is a horizontal direction (the direction vertical to the paper sheet of FIG. 1), and in Z direction that is the vertical direction (the upward and downward direction of the paper sheet of FIG. 1) under the control of the control unit 200 by using, for example, a linear motor, a stepping motor, a piezoelectric or ultrasound motor or the like as an actuator. Moreover, the stage 104 is configured to be rotatable in θ direction (a rotation direction using an axis parallel to the Z direction as a rotational axis). As a result, a user can move the XYZ θ electric stage 104 to a desired XYZ coordinates position by specifying, for example, XYZ coordinates via the input unit 400. Additionally, the XYZ θ electric stage 104 is also configured to be movable in the XY direction and the Z direction and to be rotatable in the θ direction with a user manual operation of the Z axis focus handle 108 and the XY θ handle 109.

The image capturing unit 106 is one example of the image capturing unit for capturing an observation image. As the image capturing unit 106, for example, a CCD (Charge Coupled Device) camera, a CMOS (Complementary Metal Oxide Semiconductor) camera, a video camera, and a known photodetector such as a photomultiplier tube or the like can be used. However, the image capturing unit 106 is not limited to these devices.

The revolver 105 is provided with the plurality of objective lenses 107 such as a bright-field objective lens, a phase difference objective lens or the like.

Additionally, a phase plate, not illustrated, can be further inserted in the optical path in the condenser 102 at the time of a phase difference observation. Moreover, a DIC (Differential Interference Contrast) prism and a polarization plate can be further inserted in the optical path in the condenser 102 and the revolver 105 at the time of a differential interference observation.

With the microscope 100 having such a configuration, when light is emitted from the light source 101, the emitted light passes through the condenser 102, and is irradiated on the circular sample 103 set on the XYZ θ electric stage 104. Then, the light that transmits through the circular sample 103 passes through the objective lens 107, and is formed as an observation image on the image capturing unit 106 via a tube lens not illustrated. The formed observation image is captured by the image capturing unit 106 (a digital image process is executed for the formed observation image), and the image is transmitted to the control unit 200 as a digital signal. The digital signal transmitted to the control unit 200 is thereafter displayed as an image, for example, on the display unit 300.

The control unit 200 includes a CPU and a memory 200a. The CPU reads and executes a control program stored in the memory 200a, thereby controlling operations of the entire microscope apparatus. Moreover, in the control unit 200, the CPU executes the control program stored in the memory 200a, thereby implementing a center position calculation unit 201, a pattern recognition unit 202, a rotational shift angle calculation unit 204, a position reproduction unit 205, a microscope control unit 206 and a focus adjustment unit 207. Here, the center position calculation unit 201 is one example of the center position calculation unit for calculating coordinates of the center position of the circular sample 103 based on an image of the circular sample 103, which is obtained by the image capturing unit 106. Assume that the coordinates of the center position of the circular sample 103 indicate coordinates of the center position of the circle of the circular sample 103 on an XY plane that does not include a Z coordinate. The pattern recognition unit 202 is one example of the recognition unit for recognizing a pattern image of a predetermined area based on the coordinates of the center position, which are calculated by the center position calculation unit 201, from the image of the circular sample 103, which is obtained by the image capturing unit 106. The rotational shift angle calculation unit 204 is one example of the rotational shift angle calculation unit for calculating a rotational shift angle between a first pattern image and a second pattern image. The first pattern image is a pattern image recognized by the pattern recognition unit 202 from an image of the circular image 103, which is obtained by the image capturing unit 106 in a first period. The second pattern image is a pattern image recognized by the pattern recognition unit 202 from an image of the circular sample 103, which is obtained by the image capturing unit 106 in a second period later than the first period. The position reproduction unit 205 is one example of the position reproduction unit for correcting a rotational shift of the circular sample 103 based on the rotational shift angle calculated by the rotational shift angle calculation unit 204 and for reproducing the position of the circular sample 103 in the first period. The microscope control unit 206 is one example of means for controlling the microscope 100, and transmits/receives data (for example, transmits a control signal, receives a digital signal from the image capturing unit 106) to/from the microscope 100. Note that the microscope control unit 206 can also operate under the control of another unit (such as the center position calculation unit 201, the position reproduction unit 205, the focus adjustment unit 207 or the like) within the control unit 200. The focus adjustment unit 207 is one example of means for making a focus adjustment, and, for example, calculates a focus adjustment value and performs other operations.

The control unit 200 further includes a pattern storage unit 203 and a position reproduction information storage unit 208. The pattern storage unit 203 is one example of the storage unit. In the pattern storage unit 203, a pattern image recognized by the pattern recognition unit 202 is stored. In the position reproduction information storage unit 208, data of position reproduction, observation data of the circular sample 103, and the like are stored.

The input unit 400 accepts various types of instructions, settings and the like from a user. The display unit 300 displays a GUI (Graphical User Interface) screen, various types of dialogs, which will be described later, and the like.

For example, if a user sets parameters via the input unit 400, values of the set parameters (parameters after being changed) are displayed on the display unit 300, and control signals according to the values of the parameters are output from the microscope control unit 206 of the control unit 200 to the microscope 100. In this way, the user can operate the microscope 100 via the input unit 400.

As operations of the microscope 100 that the user can operate via the input unit 400, for example, the following operations are cited.
- voltage adjustment of the light source 101
- driving of the XYZ θ electric stage 104
- image capturing from the image capturing unit 106
- magnification switching of the objective lens 107
- observation method (also called microscopy) switching (changing the condenser 102, the revolver 105 and the objective lens 107)

All of these operations are not inoperable only electrically. For example, the XYZ θ electric stage 104 can be manually operated by using the Z axis focus handle 108 and the XYθ handle 109 as described above.

The microscope apparatus according to this embodiment assumes that the image capturing unit 106 is a CCD camera, the control unit 200 is a PC (Personal Computer), the display unit 300 is an output device such as a display or the like, and the input unit 400 is an input device such as a keyboard, a mouse or the like. Moreover, the control unit 200, the display unit 300 and the input unit 400 are assumed to be interconnected via a bus or an interface. However, the microscope apparatus is not limited to this implementation. Furthermore, the microscope apparatus according to this embodiment is configured so that the microscope control unit 206 is included in the control unit 200. However, the microscope control unit 206 can be provided independently of the control unit 200. In this case, for example, a control box as the microscope control unit 206 can be provided separately from a PC as the control unit 200.

Operations of the microscope apparatus according to this embodiment are described in detail next.

The operations of the microscope apparatus according to this embodiment include the following operations as basic operations.

Initially, in a first period, an image of the circular sample 103 is captured, and coordinates of a first center position of the circular sample 103 are calculated based on the obtained image. Moreover, in the first period, the image of the circular sample 103 is captured, and a first pattern image of a predetermined area is recognized from the obtained image based on the coordinates of the first center position of the circular sample 103. Next, in a second period later than the first period, an image of the circular sample 103 is captured, and coordinates of a second center position of the circular sample 103 are calculated based on the obtained image. Moreover, in the second period, the image of the circular sample 103 is captured, and a second pattern image of a predetermined area is recognized from the obtained image based on the coordinates of the second center position of the circular sample 103. Then, a rotational shift angle between the first pattern image recognized in the first period and the second pattern image recognized in the second period is calculated, and a rotational shift of the circular sample 103 is corrected based on the rotational shift angle, and the position of the circular sample 103 in the first period is reproduced.

Here, operations of the microscope apparatus performed when a user cultures live cells and observes a temporal observation (also called a time lapse observation) by using a circular sample (culture dish) are described as one example of the operations of the microscope apparatus according to this embodiment. In such a case, the culture dish needs to be put fully stationarily in a particular culture environment such as an incubator or the like in order to culture live cells. For this reason, the culture dish is taken out of the culture environment at an observation, and returned to the culture environment upon termination of the observation. At this time, a user needs to manually set the culture dish on the XYZ θ electric stage 104. When such manual operations are repeated, it is difficult to set the culture dish at the same position and in the same orientation every time. Accordingly, with the microscope apparatus according to this embodiment, an observation position shift that can possibly occur when a culture dish is observed by a plurality of times while repeating such manual operations is corrected with operations described in detail below.

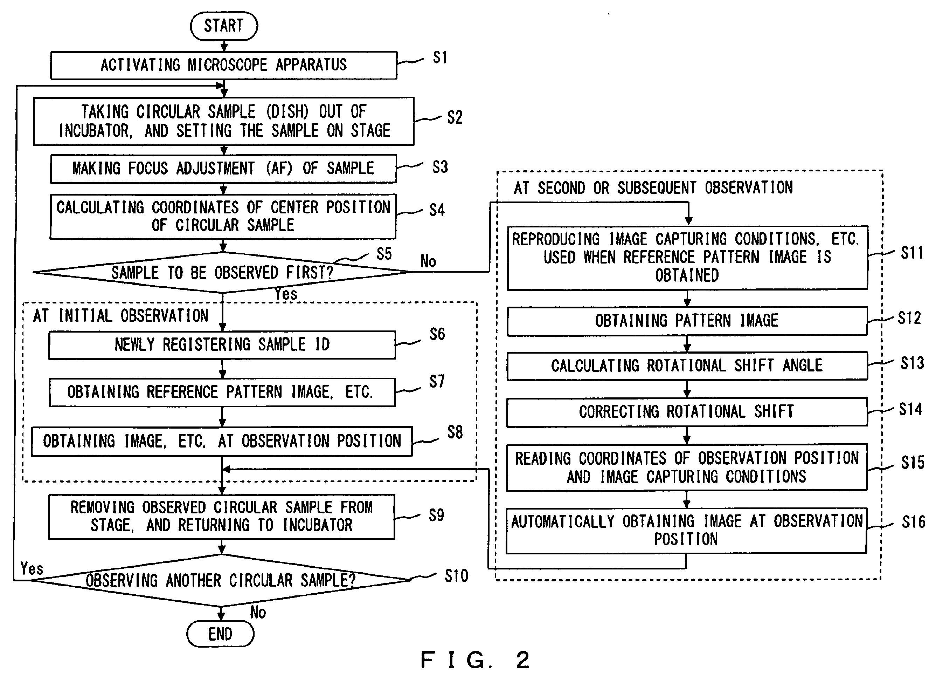

FIG. 2 is a flowchart illustrating the operations of the microscope apparatus according to this embodiment.

The flowchart illustrated in this figure represents both the operations of a user and those of the microscope apparatus for the sake of explanation. The CPU of the control unit 200 reads and executes the control program stored in the memory 200a, whereby the operations of the microscope apparatus are implemented.

The flowchart illustrated in FIG. 2 includes operations at the first observation and those at the second or subsequent observation. Main operations among the operations at the first observation are operations of step (hereinafter referred to simply as "S") 6 to S8. Moreover, main operations among the operations at the second or subsequent observation are operations of S11 to S16.

Initially, the operations at the first observation are described.

In FIG. 2, the microscope apparatus is initially activated in S1. The activation is performed under the control of the control unit 200 in response to a user operation of powering on the respective units such as the microscope 100, the control unit 200, the display unit 300 and the like. At the activation, for example, an objective lens 107 having the lowest magnification is inserted in the optical path, and at the same time, the XYZ θ electric stage 104 moves to a predetermined initial position as initial operations of the microscope apparatus. Moreover, a GUI screen for enabling operations for the microscope apparatus is displayed on the display unit 300. As a result, a user operates the GUI screen displayed on the display unit 300 via the input unit 400, whereby various types of operations (including the above described operations for the microscope 100) for the microscope apparatus can be performed.

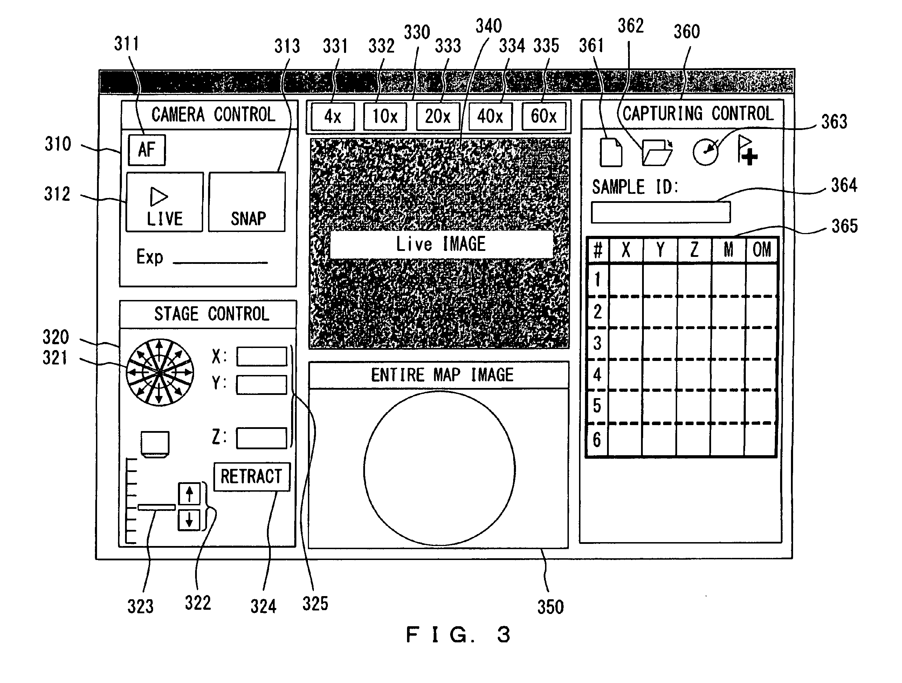

FIG. 3 schematically illustrates one example of the GUI screen displayed on the display unit 300 at this time.

As illustrated in this figure, the GUI screen includes a camera control area 310, a stage control area 320, an objective lens control area 330, an image display area 340, an entire map image area 350 and a capturing control area 360.

The camera control area 310 is an operation area for controlling the image capturing unit 106. The camera control area 310 includes an AF (Auto Focus) button 311, a LIVE button 312 and a SNAP button 313. The AF button 311 is a button for aligning a focus position of the circular sample 103. The LIVE button 312 is a button for displaying a real-time image of the circular sample 103, which is captured by the image capturing unit 106, in the image display area 340. The SNAP button 313 is a button for obtaining a snap image of the circular sample 103, which is captured by the image capturing unit 106.

The stage control area 320 is an operation area for controlling the XYZ θ electric stage 104. The stage control area 320 includes an XY direction button 321, a Z direction button 322, a Z direction slide bar 323, a retract button 324, and a numeric value input part 325. The XY direction button 321 is a button for moving the XYZ θ electric stage 104 in the XY direction. The Z direction button 322 and the Z direction slide bar 323 are respectively a button and a slide bar for moving the XYZ θ electric stage 104 in the Z direction. The retract button 324 is a button for retracting the XYZ θ electric stage 104 to a predetermined position. To the numeric value input part 325, XYZ coordinates values for moving the XYZ θ electric stage 104 to a desired XYZ position are input.

The objective lens control area 330 is an operation area for switching the objective lens 107 in the optical path. The objective lens control area 330 includes objective lens buttons 331, 332, 333, 334 and 335 for switching the objective lens 107 in the optical path to any of the objective lenses respectively having magnifications of 4×, 10×, 20×, 40× and 60×. The switching magnification of the objective lens 107 can be changed as needed by suitably selecting objective lenses respectively having desired magnifications and by attaching the objective lenses to the revolver 105.

The image display area 340 is an area where a live image or the like is displayed. The entire map image area 350 is an area where the entire circular sample 103 is schematically displayed and a position where an observation image is obtained is schematically displayed.

The capturing control area 360 is an operation area for newly registering a circular sample 103 and reading information about a registered circular sample 103, etc.. The capturing control area 360 includes a registration button 361, a read button 362, a center position calculation button 363, a sample ID display field 364 and a list area 365. The registration button 361 is a button for newly registering a circular sample 103. The read button 362 is a button for reading information about a registered circular sample 103. The center position calculation button 363 is a button for calculating coordinates of the center position of a circular sample 103. In the sample ID display field 364, a sample ID that is an identifier of the circular sample 103 is displayed. In the list area, information such as image capturing conditions and the like used when an observation image is captured are displayed as a list.

By performing a particular operation via the input unit 400, a partial area on the GUI screen can be switched to an operation area for performing another operation (such as a voltage adjustment of the light source 101, switching of an observation method, and the like)

Upon termination of S1 of FIG. 2 in this way, the user takes the circular sample (culture dish) 103 out of a particular culture environment such as an incubator or the like, and the user sets the circular sample 103 on the XYZ θ electric stage 104 in S2.

In this embodiment, an inverted microscope is adopted as the microscope 100 as described above. For example, if an erect microscope is adopted, the electric stage needs to be retracted from the objective lens when the circular sample 103 is set on the electric stage. In this case, a user can retract the electric stage with a press of the retract button 324 on the GUI screen. Namely, the electric stage is retracted from the objective lens by a predetermined distance under the control of the control unit 200 with a press of the retract button 324. The user can set the predetermined distance, which is a distance according to a limit value of a movable range of the electric stage as an initial setting. Moreover, the predetermined distance is stored in a memory, not illustrated, of the control unit 200. Naturally, the user can retract the electric stage with a manual operation by using the Z axis focus handle 108 when retracting the electric stage.

Additionally, in S2, a real-time image of the circular image 103 is displayed in the image display area 340 on the GUI screen as a live image after the circular sample 103 is set on the XYZ θ electric stage 104. This is implemented under the control of the control unit 200 in response to a user press of the LIVE button 312 on the GUI screen.

Next, in S3, a process for aligning a focus position of the circular sample 103 (focus adjustment (AF) process) is executed. This is a process executed under the control of the control unit 200 in response to a user press of the AF button 311 on the GUI screen. With this process, a focus value at each position in the Z direction is obtained, and a graph of characteristic data representing a relationship between a position in the Z direction and a focus value is calculated based on the obtained focus value. Then, an optimum position in the Z direction on an observation surface is calculated based on the graph of the characteristic data, and the XYZ θ electric stage 104 is moved to the position in the Z direction. Here, the focus value at each position in the Z direction is obtained as follows under the control of the focus adjustment unit 207. Namely, the focus value is obtained by capturing an image by the image capturing unit 105 at each position in the Z direction while moving the position of the XYZ θ electric stage 105 in the Z direction at predetermined intervals, and by calculating the focus value from a predetermined area of the captured image. Here, an area of approximately 30 percent of the captured image (however, the center position of the predetermined area is assumed to be the same as the center position of the captured image) is used as one example of the above described predetermined area. However, the predetermined area is not limited to this one. Moreover, a contrast value is used as one example of the above described focus value. However, the focus value is not limited to this one. Thus calculated graph of the characteristic data is stored in the internal memory, not illustrated, of the control unit 200.

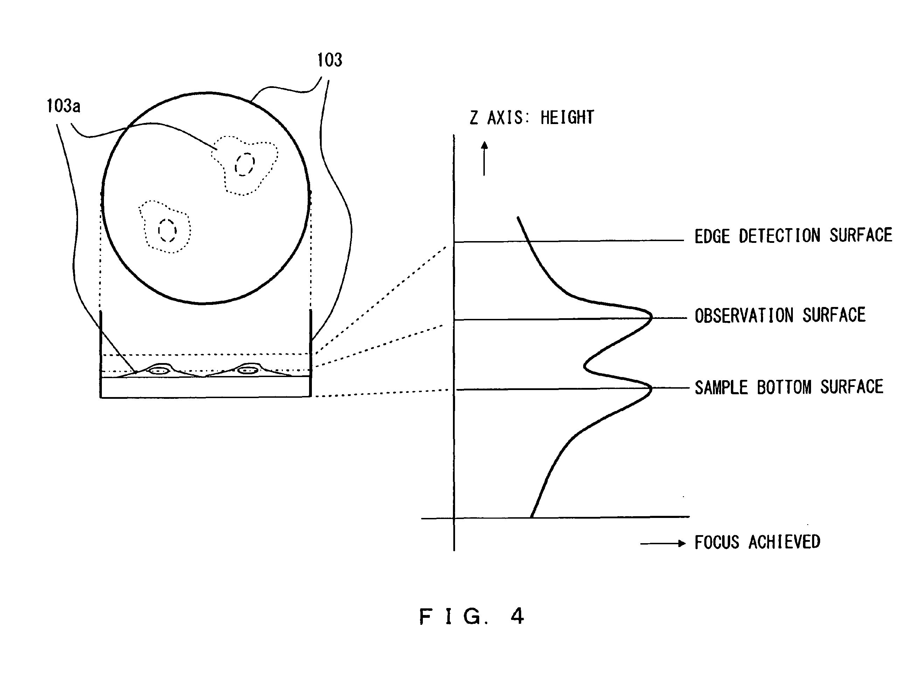

FIG. 4 illustrates thus calculated graph of the characteristic data. The right side of this figure represents the graph of the characteristic data. Here, a horizontal axis corresponds to a focus value, whereas a vertical axis corresponds to a position of the XYZ θ electric stage 104 in the Z direction. Moreover, the left side schematically illustrates a top surface and a cross section of the circular sample 103. Here, cells 103a being cultured are represented along with the circular sample 103. Moreover, FIG. 4 schematically illustrates correspondences with the positions in the Z direction with dotted lines between the graph on the right side and the portion representing the cross section of the circular sample 103 on the left side.

As represented by the graph on the right side of this figure, there are two positions having a large focus value in the Z direction. One of them is an observation surface (see the "observation surface" on the right side of this figure), whereas the other is a bottom surface of the circular sample 103 (see the bottom surface of the sample on the right side of this figure) . Since a shorter relative distance between the XYZ θ electric stage 104 and the revolver 105 at either of the two positions is the bottom surface of the circular sample 103 in the inverted microscope 100, which of the two positions is the position of the observation surface (or the bottom surface of the circular sample 103) can be identified. When the position of the observation surface is identified in this way, the XYZ θ electric stage 104 moves to that position. As a result, the focus is achieved at that position.

In S3 of FIG. 2, the focus position of the circular sample 103 is automatically aligned in this way. However, the focus position can be aligned manually by using the Z axis focus handle 108. Alternatively, the focus position can be aligned by using the Z direction button 322 or the Z direction slide bar 323 on the GUI screen.

Next, coordinates of the center position of the circular sample 103 set on the XYZ θ electric stage 104 are calculated in S4. The coordinates of the center position calculated here are assumed to be an origin of an observation position to be obtained later (the origin on the XY plane). However, the calculation itself of the coordinates of the center position in S4 is performed by using XY coordinates possessed by the XYZ θ electric stage 104.

Such a calculation of the coordinates of the center position of the circular sample 103 is intended for the following objectives.
1. By setting a predetermined area recognized as a pattern image to be described later in the vicinity of the calculated coordinates of the center position, pattern detection efficiency at the time of pattern matching to be described later can be increased.
2. By using the calculated coordinates of the center position as the origin, an observation position can be reproduced with polar coordinates.

If the rotational center position of the XYZ θ electric stage 104 is the same as the center position of the circular sample 103 when the circular sample 103 is set on the XYZ θ electric stage 104, the center position of the circular sample 103 is determined. However, if the rotational center position is not the same as the center position or if an electric stage that does not rotate is adopted, the coordinates of the center position of the circular sample 103 need to be calculated. In this embodiment, the case where the rotational center position of the XYZ θ electric stage 104 and the center position of the circular sample 103 are not the same is assumed, and the coordinates of the center position of the circular sample 103 are calculated.

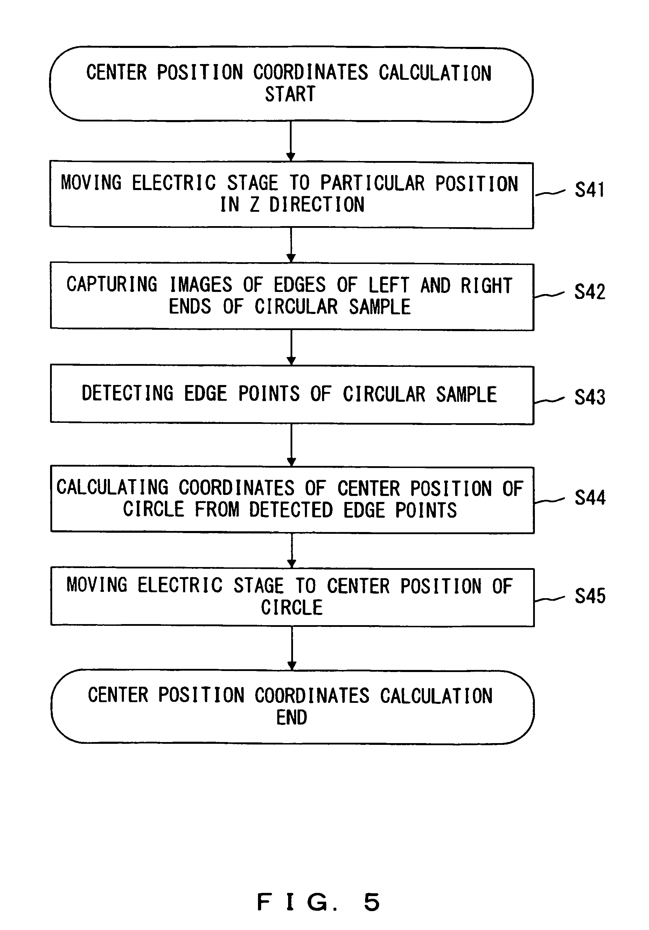

FIG. 5 is a flowchart illustrating details of the operation (S4) for calculating the coordinates of the center position of the circular sample 103.

As illustrated in this figure, a process for moving the XYZ θ electric stage 104 to a particular position is initially executed in S41. This is the process executed under the control of the control unit 200 in response to a user press of the center position calculation button 363 on the GUI screen. The move to the particular position is made to enhance an edge of an outer shape of the circular sample 103. The particular position is a position in the Z direction (see the edge detection surface on the right side of FIG. 4) where a focus value of 50 percent of a maximum focus value is obtained in the graph of the characteristic data (see the right side of FIG. 4) obtained in S3 of FIG. 2. However, if there are a plurality of positions where the focus value of 50 percent is obtained in this case, a position located on an upper side of an observation surface (see the observation surface on the right side of FIG. 4) is recognized as the particular position among the plurality of positions. Here, the particular position is assumed to have the focus value of 50 percent of the maximum focus value. However, the ratio is not limited to 50 percent. Moreover, the ratio may be arbitrarily set by a user. Otherwise, the particular position may be obtained not in this way but as follows. For example, a distance between a position of the bottom surface of the circular sample 103 and a position of the edge detection surface is prestored in the memory, not illustrated, of the control unit 200. Then, the particular position can be obtained based on the distance, and the position of the bottom surface of the circular sample 103 (see the sample bottom surface on the right side of FIG. 4) identified with the graph of the characteristic data (see the right side of FIG. 4) obtained in S3 of FIG. 2.

Upon termination of S41 of FIG. 5 in this way, an image including an edge of the outer shape of the circular sample 103 is captured next in S42. This capturing is performed as follows. Initially, a user moves the XYZ θ electric stage 104 in the XY direction by operating the stage control area 320 on the GUI screen while viewing a live image displayed in the image display area 340 on the GUI screen. Then, the user presses the SNAP button 313 on the GUI screen when an area including the edge of the left end (one end) of the circular sample 103 is displayed in the image display area 340 as a live image. As a result, the image of the area including the edge of the left end of the circular sample 103 is captured as a snap image under the control of the control unit 200. Next, the user moves the XYZ θ electric stage 104 only in the X direction (here, the horizontal direction of the circular sample 103 is assumed to be the X direction) by operating the stage control area 320 on the GUI screen. Then, in a similar manner, the user presses the SNAP button 313 when an area including an edge of the right end (the other end) of the circular sample 103 is displayed in the image display area 340 as a live image. As a result, the image of the area including the edge of the right end of the circular sample 103 is captured as a snap image under the control of the control unit 200.

The order of capturing the two images here is not limited to this one. Moreover, the user can switch the objective lens 107 in the optical path (for example, switch to an objective lens 107 having the lowest magnification) by operating the objective lens control area 330 on the GUI screen so that an image of a desired area is captured. In this case, however, the same objective lens 107 in the optical path needs to be used to capture the two images. Alternatively, the objective lens 107 in the optical path can be automatically switched to an objective lens 107 having the following magnification when a user presses the center position calculation button 363 on the GUI screen. Namely, the objective lens 107 in the optical path can be automatically switched to an objective lens 107 having a magnification (for example, the objective lens 107 having the lowest magnification) by which an image of an area suitable for edge point detection in S43 to be described later is captured. Here, the automatically switched objective lens (inserted in the optical path) can be preset based on the diameter or the like of a used circular sample 103, or may be arbitrarily set by a user.

Upon termination of S42 in this way, a process for detecting an edge point from the two images captured in S42 is executed under the control of the control unit 200 in S43.

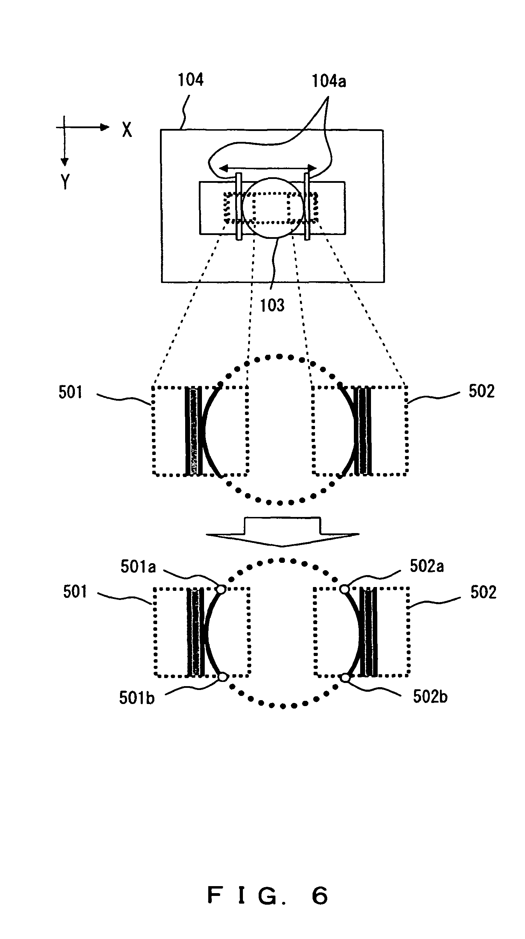

FIG. 6 is an explanatory view of the edge point detection process executed in S43.

In this figure, images 501 and 502 are the two images captured in S42. The image 501 is the image of the area including the edge of the left end of the circular sample 103, whereas the image 502 is the image of the area including the edge of the right end of the circular sample 103. The images 501 and 502 also include an area where an image of a portion of a sample fixing member 104a for fixing the circular sample 103 onto the XYZ θ electric stage 104 is captured.

The edge point detection is performed by filtering a captured image with a differential filter, and by using, as an edge point, a position where an absolute value of the output of the differential filter becomes large. For example, a Laplacian filter is used as the differential filter. When edge points are detected in this way, an edge point of the circular sample 103 is further detected from among the detected edge points. In this embodiment, an edge point 501a positioned on the uppermost side and the rightmost side, and an edge point 501b positioned on the lowermost side and the rightmost side in the image 501 of the area including the edge of the left end of the circular sample 103 are detected as edge points of the circular sample 103. Moreover, in the image 502 of the area including the edge of the right end of the circular sample 103, an edge point 502a positioned on the uppermost side and the leftmost side, and an edge point 502b positioned on the lowermost side and the leftmost side are detected as edge points of the circular sample 103.

Upon termination of S43 of FIG. 5 in this way, a process for calculating the coordinates of the center position of the circular sample 103 from the detected edge points by using, for example, a method such as a least-square method or the like is executed under the control of the control unit 200 in S44.

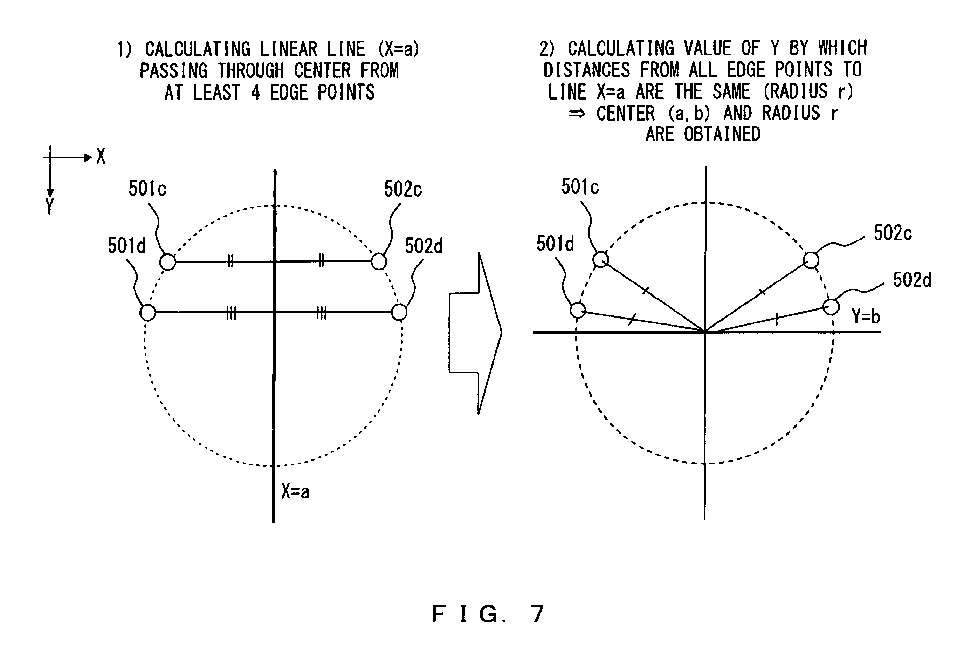

FIG. 7 is an explanatory view of the center position coordinates calculation process executed in S44. Here, a simple processing method is described as one example.

As illustrated in FIG. 7, the coordinates of the center position of the circular sample 103 are calculated from at least four edge points. Here, edge points detected as the edge points on the left end side of the circular sample 103 are defined as 501c and 501d, whereas edge points detected as the edge points on the right end side are defined as 502c and 502d. These four edge points have a positional relationship different from the four edge points (501a, 501b, 502a and 502b) illustrated in FIG. 6. However, in either case, the center position can be similarly calculated with the processing method described here.

In the process example, as illustrated on the left side of FIG. 7, the edge points 501c and 501d on the left end side are initially compared with the edge points 502c and 502d on the right end side, and edge points having the same Y coordinate are paired up. Then, all midpoints of segments respectively linking the paired edge points are detected, and a linear line (approximately linear line) X=a linking the midpoints is obtained. Next, as illustrated on the right side of FIG. 7, a linear line (approximately linear line) Y=b is obtained so that distances from all the edge points to the linear line X=a become equal. As a result, coordinates (a,b) of the center position of the circular sample 103 are obtained, and a radius r of the circular sample 103 is obtained based on the coordinates (a,b) of the center position and the edge points.

Here, the simple processing method is described. However, the process for calculating the coordinates of the center position of the circular sample 103 is not limited to this one. For example, like a method for measuring the center position of a circle disclosed by Japanese Laid-open Patent Publication No. H07-225843, the coordinates can be also calculated by performing an arc approximation with the use of a plurality of edge points.

By adopting such a processing method, the coordinates of the center position of the circular sample 103 can be calculated even though the image of the circular sample 103 cannot be actually captured as a circle when the circular sample 103 is set on the XYZ θ electric stage 104.

Thus calculated coordinates of the center position of the circular sample 103 are stored and held in the memory, not illustrated, of the control unit 200.

Upon termination of S44 of FIG. 5 in this way, the XYZ θ electric stage 104 next moves both in the XY direction and in the Z direction as follows under the control of the control unit 200 in S45. Namely, the XYZ θ electric stage 104 moves in the XY direction based on the coordinates of the center position of the circular sample 103, which are calculated in S44, so that the center position of the circular sample 103 matches that of an image capturing range by the image capturing unit 106. At the same time, the XYZ θ electric stage 104 moves in the Z direction to retract to the position of the observation surface (see the observation surface on the right side of FIG. 4) where the focus position is aligned in the above described S3.

In S4 of FIG. 2 (the flowchart of FIG. 5) executed in this way, the edge points of the circular sample 103 are automatically detected as described with reference to FIG. 6 and the like. However, the edge points can be manually detected.

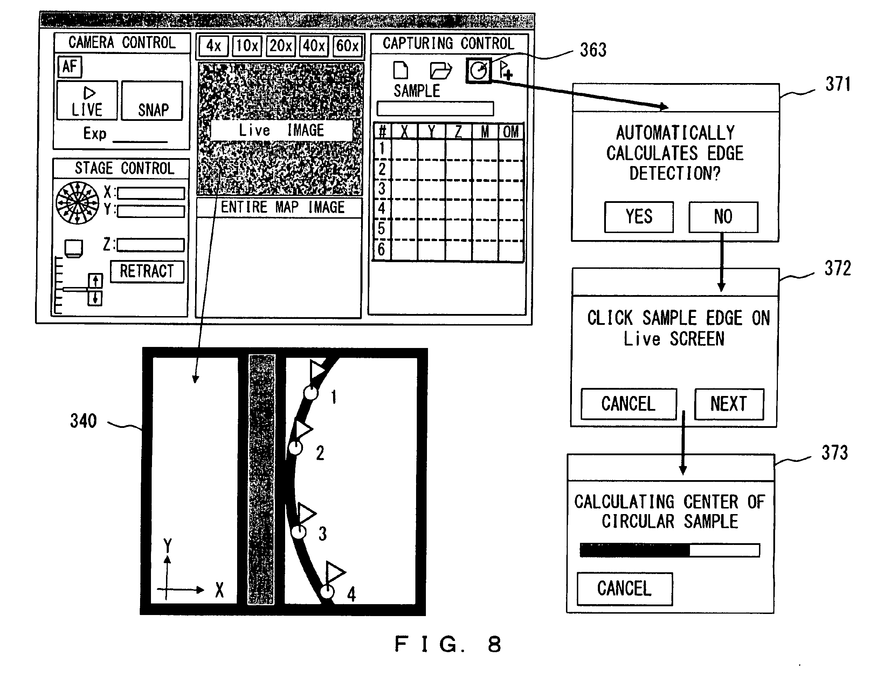

FIG. 8 is an explanatory view of an example of operations performed when the edge points are manually detected.

As illustrated in this figure, a dialog 371 "Automatically calculates edge detection?" is displayed on the display unit 300 in response to a user press of the center position calculation button 363 on the GUI screen. If the user selects "YES" in this dialog 371 via the input unit 400, edge points of the circular sample 103 are automatically detected. In the meantime, if the user selects "NO", the dialog 371 is switched to a dialog 372 "Click a sample edge on a live screen". Here, the user moves the XYZ θ electric stage 104 by operating the stage control area 320 on the GUI screen, and causes an area including edges of the circular sample 103 to be displayed in the image display area 340 on the GUI screen as a live image. Then, the user specifies (such as clicks with a mouse) a position used as an edge point of the circular sample 103 via the input unit 400 in the live image, the position is detected as the edge point. Moreover, a mark (a flag icon in this embodiment) is attached to the edge point that the user has specified in the live image for visual verification. The example illustrated in FIG. 8 represents that the four edge points have been specified in the live image as the edge points of the circular sample 103. If the user selects "NEXT" in the dialog 372 via the input unit 400 after specifying the edge points needed to calculate the coordinates of the center position of the circular sample 103 in this way, the following operations are performed. Namely, the dialog 372 is switched to a dialog 373 "Calculating the center position of the circular sample" the same time the center position coordinates calculation process (S44 of FIG. 5) of the circular sample 103 is started based on the specified edge points. If "CANCEL" is selected via the input unit 400 when the dialog 372 or 373 is displayed, the process at that time point is canceled.

Upon termination of S4 of FIG. 2 in this way, whether or not the circular sample 103 set on the XYZ θ electric stage 104 is a circular sample 103 observed for the first time is determined next in S5. This determination is performed under the control of the control unit 200, for example, by causing a dialog for inquiring of a user about whether or not the circular sample 103 is the circular sample observed for the first time to be displayed on the display unit 300, and by causing the user to select "YES" or "NO" via the input unit 400. If the user selects "YES" in this dialog, the determination results in YES and the flow goes to S6. Alternatively, if the user selects "NO" in this dialog, the determination results in "NO" and the flow goes to S11.

If the determination results in "YES" in S5, the sample ID is newly registered in S6. This new registration is performed under the control of the control unit 200 in response to a user press of the registration button 361 on the GUI screen. For the new registration, a dialog for accepting a sample ID of the circular sample 103 set on the XYZ θ electric stage 104 is displayed on the display unit 300. When the user inputs his or her desired sample ID in the dialog via the input unit 400, the sample ID is displayed in a sample ID display field 364 on the GUI screen and stored in the position reproduction information storage unit 208.

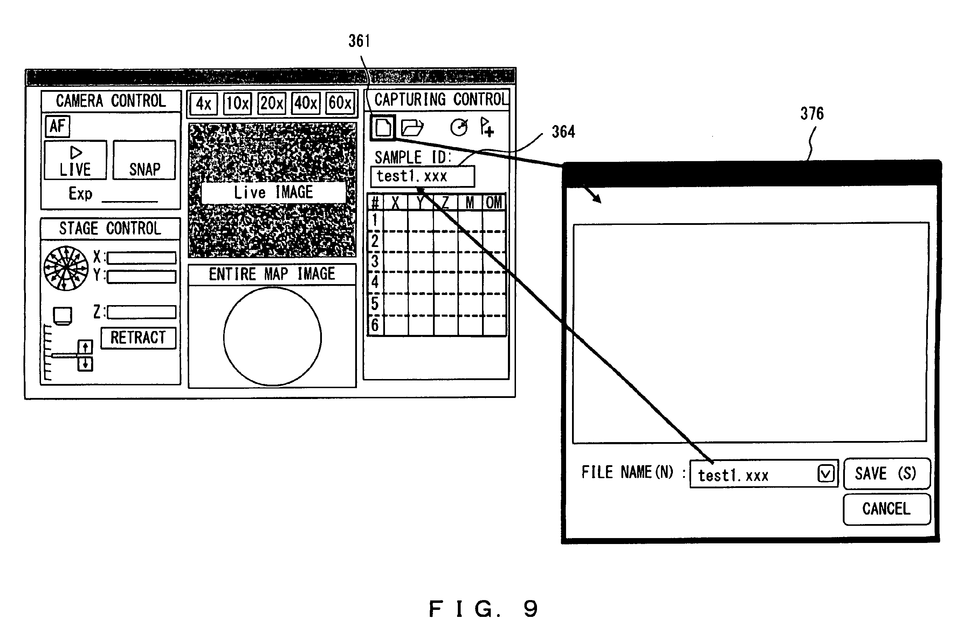

FIG. 9 is an explanatory view of the sample ID new registration performed in S6. As illustrated in this figure, when a user presses the registration button 361 on the GUI screen, the dialog 376 for accepting a sample ID input from a user is displayed on the display unit 300. This embodiment assumes to accept a sample ID as a file name. FIG. 9 illustrates an example where "test1.xxx" is input as a sample ID. Then, the user selects "SAVE (S)" in the dialog 376 via the input unit 400, whereby the input sample ID is displayed in the sample ID display field 364 on the GUI screen and stored in the position reproduction information storage unit 208. In contrast, if the user selects "CANCEL" in the dialog 376 via the input unit 400, the sample ID new registration at this time point is canceled. After "SAVE (S)" or "CANCEL" is selected in the dialog 376, the dialog 376 is not displayed on the display unit 300 any more.

This embodiment assumes that a user inputs a sample ID to be newly registered. However, the sample ID to be newly registered may be automatically input. In this case, the sample ID to be newly registered automatically can be set, for example, as "user login ID name - date - total number of new registrations.xxx". Alternatively, whether the sample ID to be newly registered is either input by a user or automatically input may be arbitrarily changed by a user.

Upon termination of S6 of FIG. 2 in this way, a reference pattern image (one example of the above described first pattern image) is next obtained under the control of the control unit 200 in S7. The reference pattern image obtained here is an image of a predetermined area in the image of the bottom surface of the circular sample 103, and obtained as follows. Initially, the XYZ θ electric stage 104 moves in the XY direction based on the coordinates of the center position (one example of the coordinates of the above described first center position) of the circular sample 103, which are calculated in the above described S4, so that the center position of the circular sample 103 matches that of the image capturing area by the image capturing unit 106. The XYZ θ electric stage 104 moves also in the Z direction to reach the position of the bottom surface of the circular sample 103 (see the sample bottom surface on the right side of FIG. 4) identified with the graph of the characteristic data (see the right side of FIG. 4) obtained in S3. As a result, the focus position is aligned with the position of the bottom surface of the circular sample 13. Moreover, the objective lens 107 is switched as needed so that an objective lens 107 having a predetermined magnification (such as the lowest magnification) is inserted in the optical path. Then, an image, having a center position that is the center position of the circular sample 103, of the bottom surface of the circular sample 103 is obtained by image capturing of the image capturing unit 106.

The reason why the focus position is aligned not with the position of the observation surface to be actually observed but with the position of the bottom surface of the circular sample 103 is as follows. Supposing that the image is obtained by aligning the focus position with the position of the observation surface to be actually observed, a pattern of the obtained image can possibly vary with time due to a morphological change or growth of live cells to be observed. Accordingly, such an image is not suitable as an image used for pattern matching to be performed later.

Additionally, when the image of the bottom surface of the circular sample 103 is obtained, image capturing is performed under image capturing conditions different from those used when an image of the observation surface to be actually observed is obtained. The reason is to more clearly capture an image of a distinctive pattern, a flaw or the like on the bottom surface of the circular sample 103. Areas of the captured image portions (areas of the image) are used for the pattern matching to be performed later. For example, even though image capturing conditions according to a phase difference observation method, set as an observation method, are set as image capturing conditions when an image on an observation surface is obtained, the observation method is changed to a bright-field observation method when the image of the bottom surface of the circular sample 103 is obtained. As a result, the image capturing conditions are changed to those according to the bright-field observation method. Alternatively, for example, even though image capturing conditions according to a differential interference observation method, set as an observation method, are set as image capturing conditions when an image on an observation surface is obtained, the observation method is changed to a phase difference observation method when the image of the bottom surface of the circular sample 103 is obtained. As a result, the image capturing conditions are changed to those according to the phase difference observation method. Such a change of an observation method (including image capturing conditions) is automatically performed. However, for example, a user may arbitrarily change the observation method. After the image of the bottom surface of the circular sample 103 is obtained, the observation method (including the image capturing conditions) is restored to an observation method used when an image of an observation surface to be actually observed is obtained.

When the image of the bottom surface of the circular sample 103 is obtained in this way, an image of a predetermined area in the image is next recognized and obtained as a reference pattern image. Here, the predetermined area is determined based on the image capturing area of the image capturing unit 106, and the coordinates of the center position of the circular sample 103, which are calculated in S4. This embodiment assumes that the predetermined area is an area within a circle having a center that is the center of the image, and having a radius that is the shortest length from the center to an end of the image in the obtained image of the bottom surface of the circular sample 103.

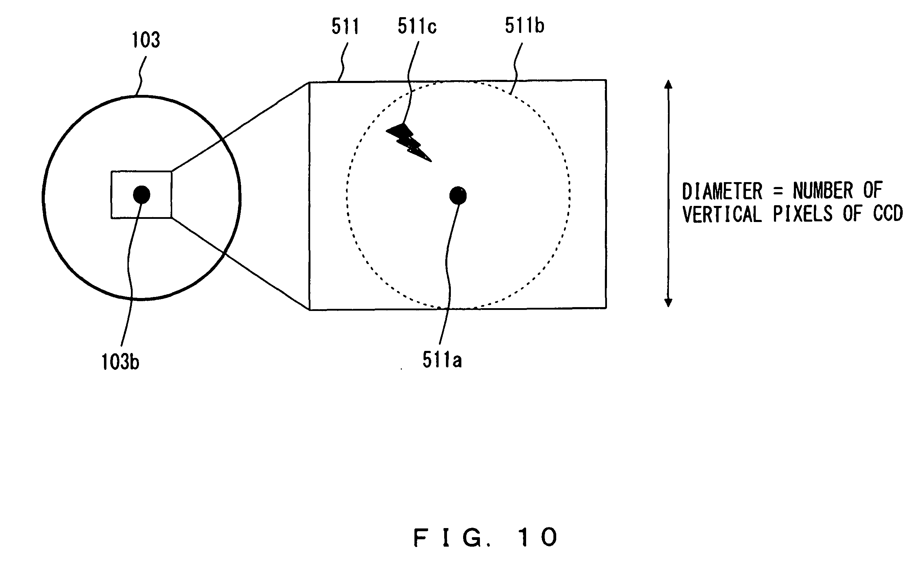

FIG. 10 illustrates one example of the image of the predetermined area, which is recognized as a reference pattern image, from the image of the bottom surface of the circular sample 103.

As illustrated in this figure, the image of the predetermined area, which is recognized as the reference pattern image from the image 511 of the bottom surface of the circular sample 103, is the following image. Namely, the image of the predetermined area is an image of the area 511b within the circle having a center that is the center 511a of the image 511 of the bottom surface, and having a radius that is the shortest length from the center 511a to an end of the image (the length from the center 511a to the upper or lower end of the image 511 in this example).

In the example illustrated in FIG. 10, the diameter of the area 511b corresponds to the number of vertical pixels of the CCD of the image capturing unit 106. Moreover, a center 103b of the circular sample 103 corresponds to the center 511a of the image 511. Additionally, the image of the area 511b within the circle also includes a pattern 511c where an image of a flaw located on the bottom surface of the circular sample 103 is captured.

The reason why such an image of the area within the circle is recognized as a reference pattern image is as follows. If a rotational shift of the circular sample 103 occurs when the circular sample 103 is set on the XYZ θ electric stage 104 at the second or subsequent observation, a pattern included outside the area within the circle, namely, the pattern included in the area outside the circle moves outside the image of the bottom surface of the circular sample 103, which is obtained at the second or subsequent observation. Accordingly, there is a possibility that the pattern matching to be described later cannot be performed.

Note that a user may arbitrarily set the image of the predetermined area, which is recognized as the reference pattern image from the image of the bottom surface of the circular sample 103. However, the predetermined area is defined as an area within a circle having a center that is the center of the image of the bottom surface of the circular sample 103, and having a radius that is shorter than the shortest length from the center to an end of the image in order to eliminate the above described possibility.

When the reference pattern image is obtained in this way, the following image and information are stored in the position reproduction information storage unit 208 in association with the sample ID newly registered in S6. The image and the information are the reference pattern image, and the information such as image capturing conditions, the position of the XYZ θ electric stage 104 in the Z direction, and other items of information when the reference pattern image is captured. Here, the image capturing conditions used when the reference pattern image is captured are image capturing conditions used also when the image of the bottom surface of the circular sample 103 including the reference pattern image is captured. Moreover, the image capturing conditions include the magnification of the objective lens 107, an observation method, an exposure time, an image size and the like.

The reference pattern image, and the information such as the image capturing conditions, the position in the Z direction, and the like, which are stored here, are used for operations performed later at the second or subsequent observation.

Upon termination of S7 of FIG. 2 in this way, an image at an observation position to be observed actually in the circular sample 103 is obtained, and at the same time, also the coordinates of the observation position, image capturing conditions, and the like used when the image is obtained are obtained. However, the obtained XY coordinates of the observation position are represented not with a coordinate system possessed by the XYZ θ electric stage 104 but with a coordinate system using the coordinates of the center position of the circular sample 103, which are calculated in the above described S4, as an origin. Namely, the origin of the XY coordinates is changed from the origin possessed by the XYZ θ electric stage 104 to the center position of the circular sample 103, which is calculated in the above described S4, thereby representing the XY coordinates of the observation position.

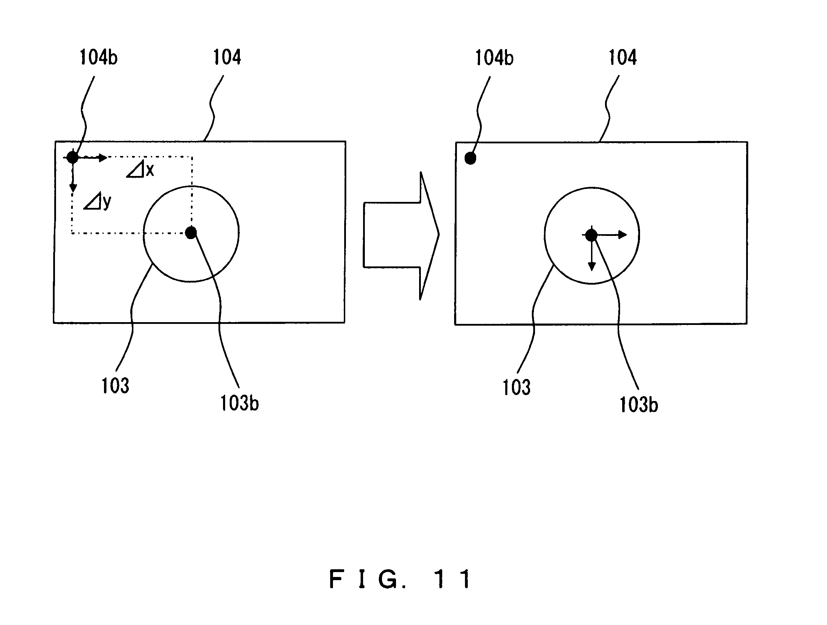

FIG. 11 is an explanatory view of such a change of the origin.

As illustrated in this figure, the origin of the XY coordinates is changed from an origin 104b in the coordinate system possessed by the XYZ θ electric stage 104 to the center position 103b of the circular sample 103. Here, in the coordinate system possessed by the XYZ θ electric stage 104, XY coordinates of the center position 103b of the circular sample 103 are (Δx,Δy).

The reason why the origin of the XY coordinates is changed in this way is as follows. If the circular sample 103 is repeatedly removed/set, the center of the circular sample 103 cannot be always set at the same position on the XYZ θ electric stage 104. Accordingly, it is more convenient to use relative coordinates having an origin that is the center of the circular sample 103 as the XY coordinates of an observation position in order to reproduce the observation position stored at the first observation at the second or subsequent observation.

Additionally, at that time, a rotational shift of the circular sample 103 set on the XYZ θ electric stage 104 is also taken into account at the second or subsequent observation, and polar coordinates having an origin that is the center of the circular sample 103 are used as relative coordinates.

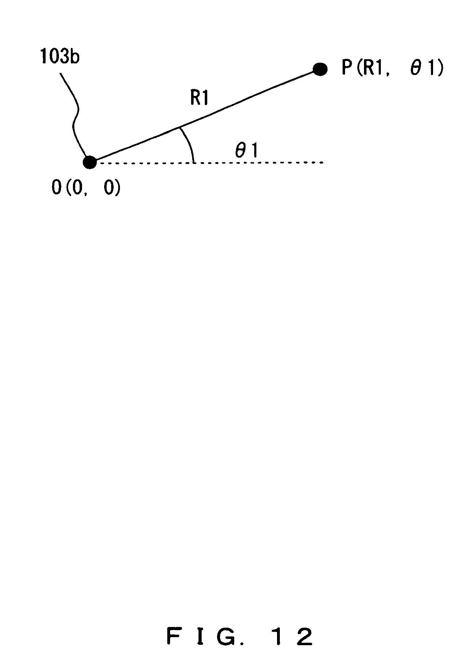

FIG. 12 illustrates an example where the XY coordinates of an observation position are represented with polar coordinates.

In the example illustrated in FIG. 12, the XY coordinates of an observation position P are represented as (R1, θ1) by using a polar coordinate system having an origin O that is the center position 103b of the circular sample 103. Here, R1 is a distance between the origin O and the observation position P, and θ 1 is an angle formed between a horizontal line (a linear line in the horizontal direction of FIG. 12) that passes through the origin O and a segment OP. The coordinates of the observation position P can be represented also as (R1cos θ 1, R1sin θ 1) with an XY coordinate system having the origin O that is the center position 103b of the circular sample 103.

By representing and storing the XY coordinates of an observation position with polar coordinates as described above, the observation position can be reproduced based on the coordinates of the observation position, and the coordinates of the center position of the circular sample 103, which are obtained at the second or subsequent observation when the observation position is reproduced at the second or subsequent observation.

In S8 of FIG. 2, an image or the like of the observation position is specifically obtained as follows.

Initially, a user operates the stage control area 320 or the objective lens control area 330 on the GUI screen as needled so that a desired observation area is displayed in the image display area 340 while verifying a live image of the circular sample 103 displayed in the image display area 340 on the GUI screen. When the desired observation area is displayed in the image display area 340, the user presses the SNAP button 313 on the GUI screen. As a result, under the control of the control unit 200, an image of the area displayed in the image display area 340 is obtained with image capturing performed by the image capturing unit 106, and the captured image is stored in the position reproduction information storage unit 208 in association with the sample ID newly registered in S6 along with information such as coordinates, image capturing conditions, and the like at the time of image capturing.

The coordinates at the time of image capturing are coordinates of the center position of an obtained image, and represented with relative coordinates as described above. Moreover, the image capturing conditions at the time of image capturing include the magnification of the objective lens 107, an observation method, an exposure time, an image size and the like used at the time of image capturing.

Additionally, the information such as the coordinates, the image capturing conditions, and the like at the time of image capturing are displayed as a list in the list area 365 on the GUI screen. Moreover, the position (corresponding to the center position of an obtained image) of the circular sample 103, at which the obtained image is captured, is schematically displayed in the entire map image area 350 on the GUI screen so that a user can verify that position.

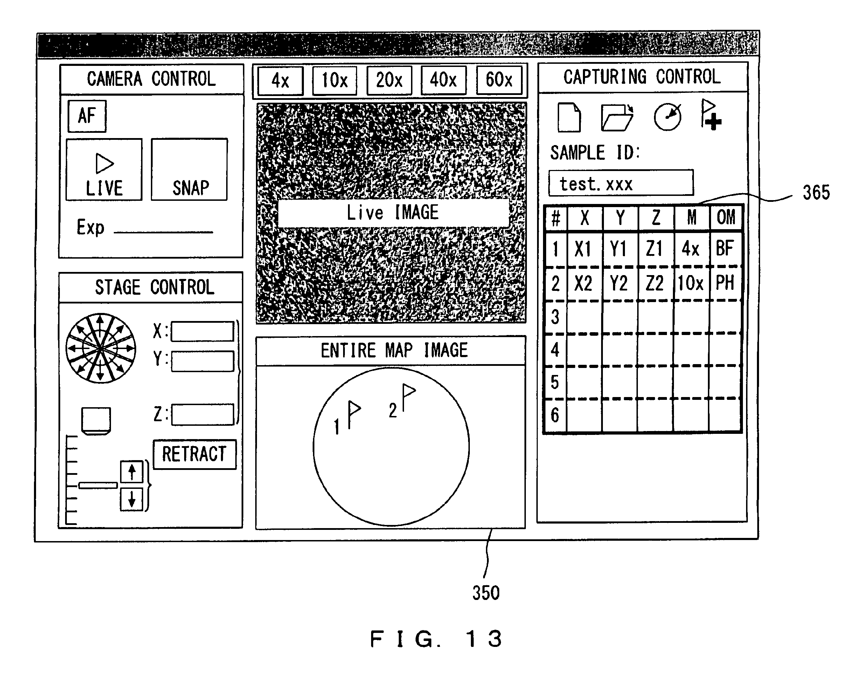

FIG. 13 illustrates one example of the GUI screen when an image at an observation position is obtained twice in this way.

As illustrated in this figure, coordinates and image capturing conditions used when each image at each observation position is obtained are displayed as a list in the list area 365, and at the same time, each observation position is schematically displayed as a flag icon in the entire map image area 350.

In the list area 365, "X", "Y" and "Z" indicate the coordinates of each observation position. As described above, XY coordinates of each observation position are represented and stored with polar coordinates. However, the coordinates of each observation position are represented and displayed with XY coordinates when being displayed in the list area 365. Naturally, the coordinates represented with the polar coordinates can be displayed in the list area 365 unchanged. Moreover, in the list area 365, "M" indicates the magnification of an objective lens 107, and "OM" indicates an observation method. Such items displayed in the list area 365 are not limited to these ones. A user may arbitrarily select items.

Upon termination of S8 of FIG. 2 in this way, the user removes the circular sample 103 from the XYZ θ electric stage 104 and again keeps the circular sample 103 in a particular culture environment such as an incubator or the like in S9.

Next, in S10, whether or not to transfer to an observation of another circular sample 103 is determined. This determination is performed with a predetermined operation that the user performs via the input unit 400. For example, if the user performs the operation for transferring to an observation of another circular sample 103, the determination results in "YES" and the flow goes back to S2. In contrast, if the user performs an operation for terminating this process (the operation for not transferring to the observation of another circular sample 103), the determination results in "NO" and the process is terminated.

By performing the operations for the first observation in this way, the following image and information are stored in the position reproduction information storage unit 208 in association with the sample ID newly registered in S6. The image and the information are the reference pattern image obtained in S7, information such as the image capturing conditions, the position of the XYZ θ electric stage 104 in the Z direction when the reference pattern image is captured, the image at the observation position, which is obtained in S8, and information such as coordinates of the observation position, the image capturing conditions and other items of information when the image is captured.

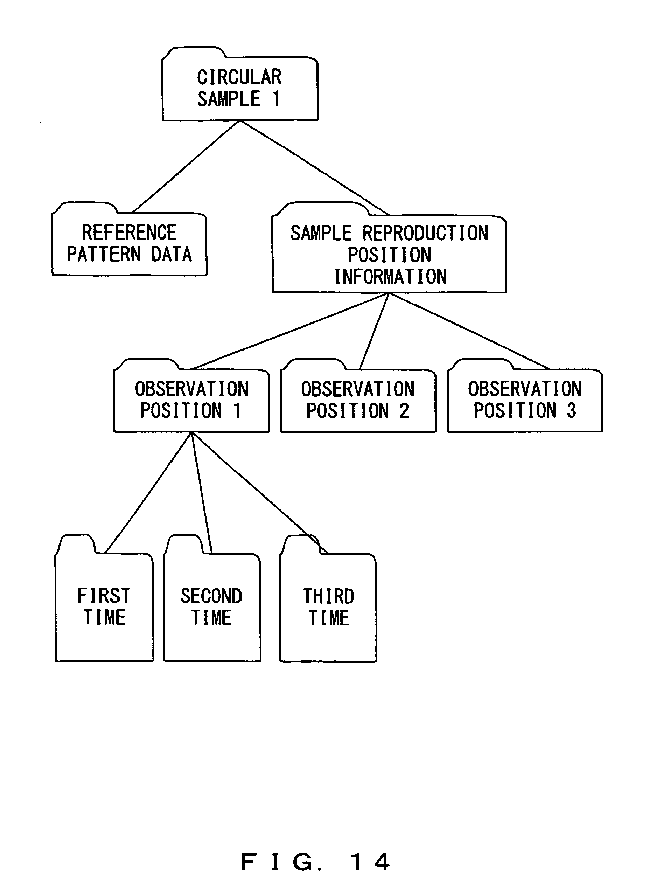

FIG. 14 illustrates a folder structure of images and information stored in the position reproduction information storage unit 208 in association with a newly registered sample ID.

As illustrated in FIG. 14, the folder structure is composed of a hierarchical structure of four layers from the first highest layer to the fourth lowest layer. A folder of the first layer is a sample ID folder provided for each newly registered sample ID. Here, the sample ID folder includes a sample ID (a file having a file name input as a sample ID at the time of new registration) newly registered in S6 of FIG. 2. FIG. 14 illustrates the sample ID folder provided for one newly registered sample ID as a circular sample 1 folder. Each sample ID folder includes a reference pattern data folder and a sample reproduction position information folder as folders of the second layer. Here, the reference pattern data folder includes the reference pattern image obtained in S7 of FIG. 2, and information such as image capturing conditions, the position of the XYZ θ electric stage 104 in the Z direction, and other items of information when the reference pattern image is captured. Each sample reproduction position information folder includes an observation position folder provided for each observation position as a folder of the third layer. Here, each observation position folder includes information such as the coordinates of the observation position, image capturing conditions and the like when the image at the observation position, which is obtained in S8, is captured. In FIG. 14, the observation position folders respectively provided for the observation position 1, the observation position 2 and the observation position 3 are represented as an observation position 1 folder, an observation position 2 folder and an observation position 3 folder. Each of the observation position folders includes an observation image folder provided for each observation as a folder of the fourth layer. In this figure, the observation image folders respectively provided for the first, the second and the third observations are represented as a first folder, a second folder and a third folder, respectively. Here, the first folder includes the image at the observation position, which is obtained in S8.

The folder structure of images and information stored in the position reproduction information storage unit 208 in association with a newly registered sample ID is not limited to that illustrated in FIG. 14.

Operations performed at the second or subsequent observation are described next.

With these operations, after S1 of FIG. 2 is performed similarly to the operations performed at the first observation, or after the determination of S10 results in "YES", S2 to S5 are performed similarly to the operations performed at the first observation. However, the circular sample 103 set on the XYZ θ electric stage 104 at this time in S2 is a circular sample 2 used in the second or subsequent observation.

Then, the user selects "NO" via the input unit 400 in the above described dialog for inquiring whether or not the circular sample 103 set on the XYZ θ electric stage 104 is a circular sample to be observed for the first time, whereby the determination of S5 results in "NO". Then, the flow goes to S11.

In S11, the following information is read from the position reproduction information storage unit 208 (the reference pattern data folder of FIG. 14). The information is information such as the image capturing conditions, the position of the XYZ θ electric stage 104 in the Z direction, and the like when the reference pattern image obtained at the first observation of the circular sample 103 set on the XYZ θ electric stage 104 is captured. Then, the image capturing conditions, the position of the XYZ θ electric stage 104 in the Z direction, and other items of information when the reference pattern image is captured are reproduced on the microscope 100 based on the information. Moreover, the reference pattern image obtained at the first observation is read from the position reproduction information storage unit 208 (the reference pattern data folder of FIG. 14) and stored in the pattern storage unit 112. These operations are performed under the control of the control unit 200 in response to an input of the sample ID of the circular sample 103 set on the XYZ θ electric stage 104 via the input unit 400 with a user press of the read button 362 on the GUI screen. The operation that the user performs for inputting the sample ID of the circular sample 103 is performed as follows.

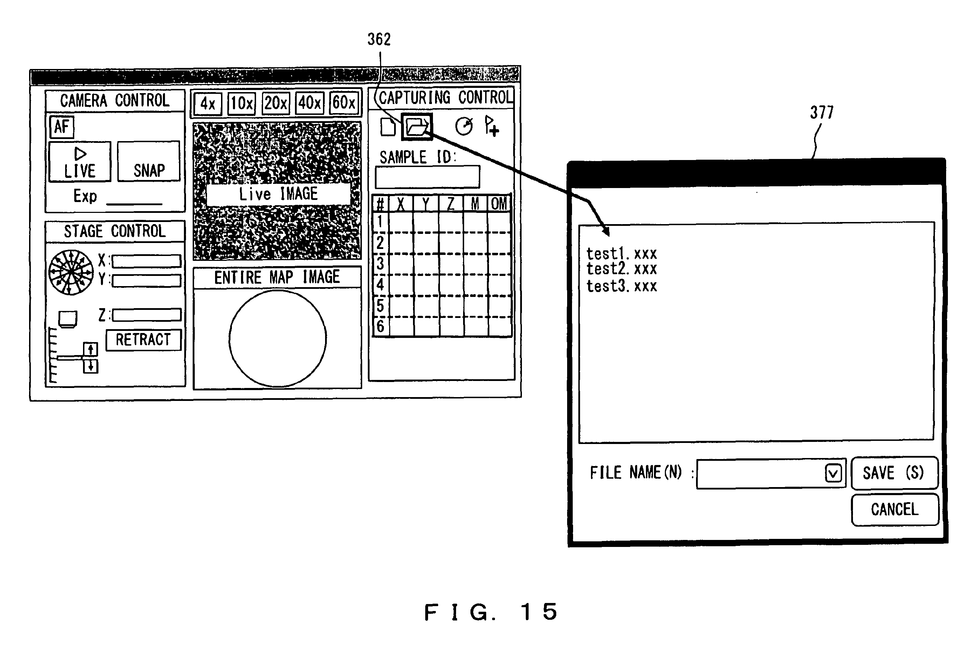

FIG. 15 illustrates a dialog displayed on the display unit 300 when the user inputs the sample ID of the circular sample 103.

When the user presses the read button 362 on the GUI screen, the dialog 377 for inputting a sample ID is displayed under the control of the control unit 200 in response to the user press as illustrated in this figure. In the dialog 377, all sample IDs read from the position reproduction information storage unit 208 are displayed as a list of sample IDs registered up to this point. In the example illustrated in this figure, three sample IDs such as "test1.xxx", "test2.xxx" and "test3. xxx" are displayed as sample IDs. Then, the user selects the sample ID of the circular sample 103 set on the XYZ θ electric stage 104 with the input unit 400 from among the sample IDs displayed as the list. Alternatively, the user may directly input the sample ID and select "OPEN (O)" in the dialog 377. In this way, the sample ID is input. Moreover, the sample ID input at this time is displayed in the sample ID display field 364. In contrast, if the user selects "CANCEL" in the dialog 377 via the input unit 400, the input of the sample ID at this time point is canceled. After "OPEN (O)" or "CANCEL" in the dialog 377 is selected, the dialog 377 is not displayed on the display unit 300 any more.

If corresponding image capturing conditions, position in the Z direction, and the like cannot be reproduced according to the input sample ID in S11 of FIG. 2, an error message may be displayed on the display unit 300 under the control of the control unit 200. Also in this case, a dialog for inquiring of the user about whether or not to newly register a sample ID may be displayed, and the flow may go to S6 if "yews" is selected in this dialog.

Upon termination of S11 in this way, a pattern image (one example of the above described second pattern image) for which pattern matching with the reference pattern image read in the above described S11 is performed is obtained next under the control of the control unit 200 in S12. Specifically, the XYZ θ electric stage 104 initially moves in the XY direction as follows. Namely, the XYZ θ electric stage 104 moves in the XY direction based on the coordinates of the center position of the circular sample 103, which are calculated in the above described S4 for the circular sample 103 set on the XYZ θ electric stage 104, so that the center position of the circular sample 103 matches that of the image capturing area of the image capturing unit 106. In the Z direction, the XYZ θ electric stage 104 has already moved to the position when the reference pattern image is captured in the above described S11. With image capturing by the image capturing unit 106, the image, having the center position that is the center position of the circular sample 103, of the bottom surface of the circular sample 103 is obtained.

When the image of the bottom surface of the circular sample 103 is obtained in this way, an image of a predetermined area in the image of the bottom surface is recognized and obtained as a pattern image similarly to the case of obtaining the reference pattern image. Here, also the predetermined area is determined based on the image capturing area of the image capturing unit 106, and the coordinates of the center position of the circular sample 103, which are calculated in the above described S4. In this embodiment, the predetermined area is assumed to be an area within a circle having a center that is the center of the circle, and having a radius that is the shortest length from the center to an end of the image in the obtained image of the bottom surface of the circular sample 103. As a result, the size of the pattern image and that of the reference pattern image become equal. Thus obtained pattern image is stored in the pattern storage unit 203.

Upon termination of S12 in this way, pattern matching is performed under the control of the control unit 200 between the reference pattern image stored in the pattern storage unit 203 in the above described S11 and the pattern image stored in the pattern storage unit 203 in the above described S12. Then, a rotational shift angle (a rotational shift amount) between the reference pattern image and the pattern image is calculated. Here, the calculation of the rotational shift angle using the pattern matching can be performed, for example, by using a known technique such as an affine transform or the like.

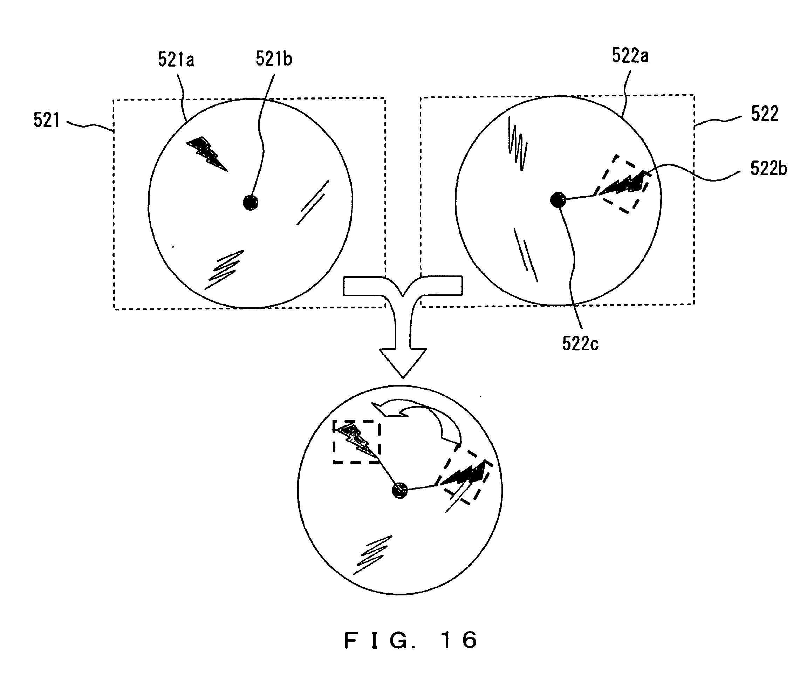

FIG. 16 illustrates an example of calculating a rotational shift angle by using pattern matching.

The example illustrated in this figure is a simple calculation example of calculating the rotational shift angle by performing pattern matching with a method for detecting a focused area 522b from a pattern image 522a, and for detecting the focused area 522b from a reference pattern image 521a.

In this figure, an image 521 represents an image of the bottom surface of the circular sample 103 including a reference pattern image 521a when the above described S7 is executed at the first observation for the circular sample 103 set on the XYZ θ electric stage 104. Moreover, a point 521b represents the center position of the reference pattern image 521a (also the center position of the image 521).

Additionally, an image 522 represents the image of the bottom surface of the circular sample 103 including the pattern image 522a when the above described S12 is executed for the circular sample 103 set on the XYZ θ electric stage 104. Moreover, a point 522c represents the center position of the pattern image 522a (also the center position of the image 522).

Detection of the focused area 522b from the pattern image 522a is performed, for example, by detecting the largest area as an aggregation of pixels having a low brightness value from the pattern image 522a. In this case, a brightness value threshold value is preset, and an aggregation of pixels having a brightness value smaller than the threshold value is detected from the pattern image 522a, and an area having the largest number of pixels included in the aggregation is detected as a focused area. In this case, a user may arbitrarily change the brightness value threshold value.

Detection of the focused area 522b from the reference pattern image 521a is performed, for example, as follows. A relative distance between the center position 522c and the focused area 522b of the pattern image 522a can be calculated. Accordingly, the focused area 522b is detected by rotating the focused area 522b about the center position 522c, and by detecting an area where all characteristic points (such as edge coordinates, and the like) of the focused area 522b match is detected from the reference pattern image 521a.

Then, a rotational angle formed when the area where all the characteristic points of the focused area 522b match is detected from the reference pattern image 521a is calculated as a rotational shift angle between the reference pattern image 521a and the pattern image 522a.

As described above, in this embodiment, the pattern matching between the reference pattern image 521a and the focused area 522b of the pattern image 522a is performed as pattern matching performed between the reference pattern image 521a and the pattern image 522a. However, the pattern matching is not limited to this one.

Upon termination of S13 of FIG. 2 in this way, the XYZ θ electric stage 104 rotates in the θ direction under the control of the control unit 200 so that the rotational shift angle calculated in S13 becomes 0 degrees. As a result, the rotational shift of the circular sample 103 between the first observation and the second or subsequent observation is corrected.

Next, in S15, coordinates of each observation position, and image capturing conditions at each observation position, which are obtained for the circular sample 103 having the sample ID input in S11, are read from the position reproduction information storage unit 208 (each observation position folder of FIG. 14) under the control of the control unit 200. Then, each observation position is schematically displayed as a flag icon in the entire map image area 350 on the GUI screen based on the read coordinates of each observation position. Moreover, the read image capturing conditions at each observation position are displayed in the list area 365 on the GUI screen.

Then, in S16, an image is captured at each observation position by the image capturing unit 106 based on the coordinates and the image capturing conditions of each observation position, which are read from the position reproduction information storage unit 208 in S15, under the control of the control unit 200, so that the image at each observation position is automatically obtained. In this case, based on corresponding coordinates and image capturing conditions, the XYZ θ electric stage 104 moves to the coordinates of each observation position, and at the same time, the image capturing conditions are reproduced on the microscope 100. Then, an image is captured by the image capturing unit 106.

The image obtained at each observation position is stored in the position reproduction information storage unit 208 (the observation image folder of FIG. 14) as an image obtained at the second or subsequent observation in association with the sample ID input in S11.

Upon termination of S16 in this way, the flow goes back to S9, and these operations are similarly repeated until the determination of S10 results in "NO".

As described above, with the microscope apparatus according to this embodiment, a rotational shift of the circular sample 103, which can possibly occur between the first observation and the second or subsequent observation when the circular sample 103 is observed a plurality of times, can be corrected. Accordingly, an observation position at the first observation can be reproduced with high accuracy also at the second or subsequent observation, thereby enabling an accurate temporal observation.

Note that the microscope apparatus according to this embodiment can be modified in a variety of ways.

For example, the following modification can be performed as a modification example 1.

In this modification example, the rotational shift correction performed in S14 of FIG. 2 is performed by rotating not the XYZ θ electric stage 104 but the image capturing unit 106.

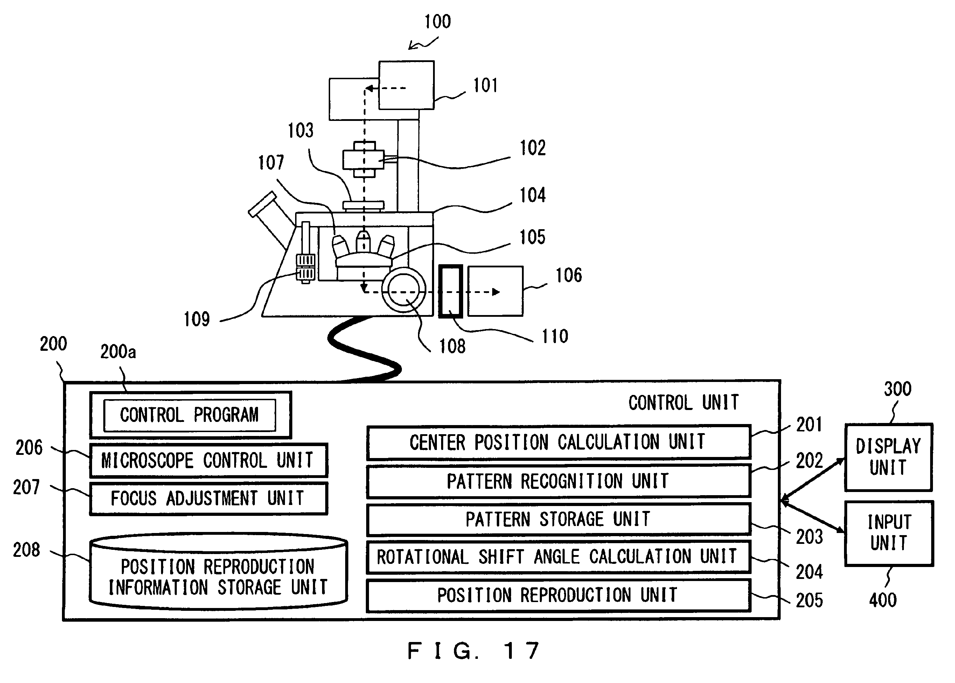

FIG. 17 schematically illustrates an entire configuration of a microscope apparatus according to this modification example.

As illustrated in this figure, the microscope 100 further includes a rotation unit 110 in the microscope apparatus according to this modification example. The rotation unit 110 rotates the image capturing unit 106 about an optical axis that passes through the center of an image capturing surface as a rotational axis under the control of the control unit 200.

In the microscope apparatus according to this modification example, the rotation unit 110 rotates the image capturing unit 106 under the control of the control unit 200 in S14 of FIG. 2 so that the rotational shift angle calculated in S13 becomes 0 degrees. As a result, the rotational shift between an image of the circular sample 103, which is obtained at the first observation, and an image of the circular sample 103, which is obtained at the second or subsequent observation, is corrected.

In this modification example, the image capturing unit 106 is automatically rotated in this way. However, the image capturing unit 106 may be manually rotated. In this case, the rotation unit 110 is configured to have a manual handle, which a user operates to rotate the image capturing unit 106. Moreover, the rotational shift angle calculated in S13 of FIG. 2 is displayed on the display unit 300 (the rotational shift angle may be displayed on the GUI screen), and at the same time, the displayed rotational shift angle may be varied according to the rotational angle of the image capturing unit 106. In this way, the user operates the manual handle of the rotation unit 110 so that that the rotational shift angle displayed on the display unit 300 becomes 0 degrees, thereby enabling the rotational shift of the image of the circular sample 103 to be corrected.

As described above, according to this modification example, an image of the circular sample 103, which has no rotational shift between the first observation and the second or subsequent observation, can be obtained and displayed on the display unit 300, and effects similar to those of the above described embodiment can be achieved.

Additionally, the microscope apparatus according to this embodiment can be modified, for example, as follows as a modification example 2.

In this modification example, the rotational shift correction in S14 of FIG. 2 is performed by rotating not the XYZθ electric stage 104 but an image displayed in the image display area 340 on the GUI screen (the image displayed on the display unit 300).

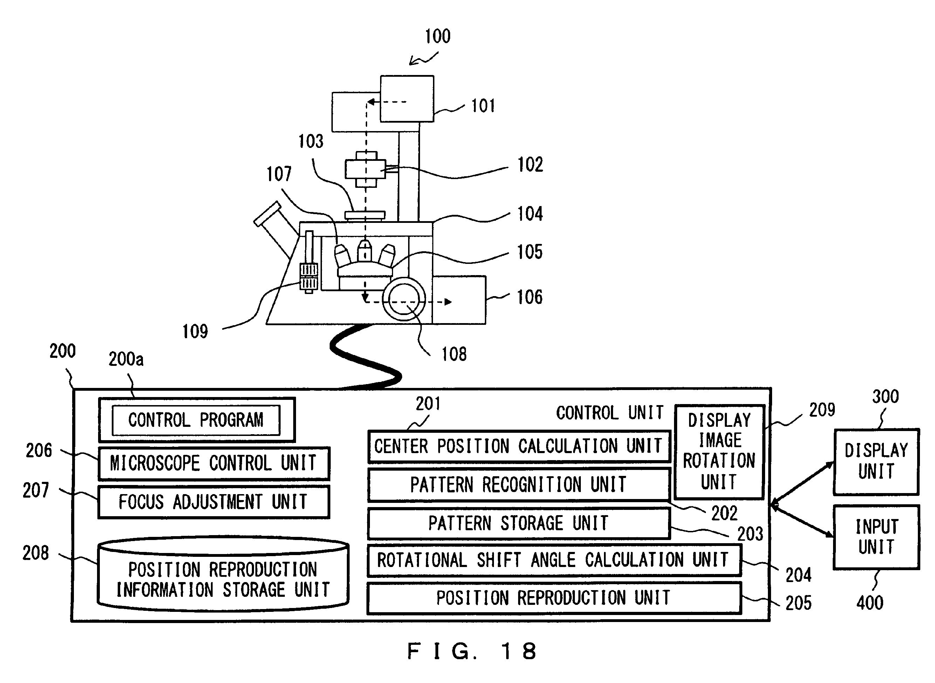

FIG. 18 schematically illustrates an entire configuration of a microscope apparatus according to this modification example.

As illustrated in this figure, in the microscope apparatus according to this modification example, the control unit 200 further includes a display image rotation unit 209. The display image rotation unit 209 rotates an image displayed in the image display area 340 on the GUI screen about the center of the image as a rotational center.

With the microscope apparatus according to this modification example, the display image rotation unit 209 rotates an image of the circular sample 103, which is displayed in the image display area 340 on the GUI screen, under the control of the control unit 200 so that the rotational shift angle calculated in S13 becomes 0 degrees. As a result, a rotational shift between an image of the circular sample 103 displayed on the display unit 300 at the first observation and an image of the circular sample 103 displayed on the display unit 300 at the second or subsequent observation is corrected.

The rotation of an image by the display image rotation unit 209 can be performed with a known image process such as an affine transform or the like.

As described above, according to this modification example, an image of a circular sample 103, which has no rotational shift between the first observation and the second or subsequent observation, can be displayed on the display unit 300 similarly to the modification example 1. As a result, effects similar to those of the above described embodiment can be achieved.

Additionally, the microscope apparatus according to this embodiment can be also modified, for example, as follows as a modification example 3.

In this modification example, an observation position can be added or deleted at the second or subsequent observation. As a result, at the second or subsequent observation, a user can add a new observation position, or deletes an observation position determined to be unnecessary.

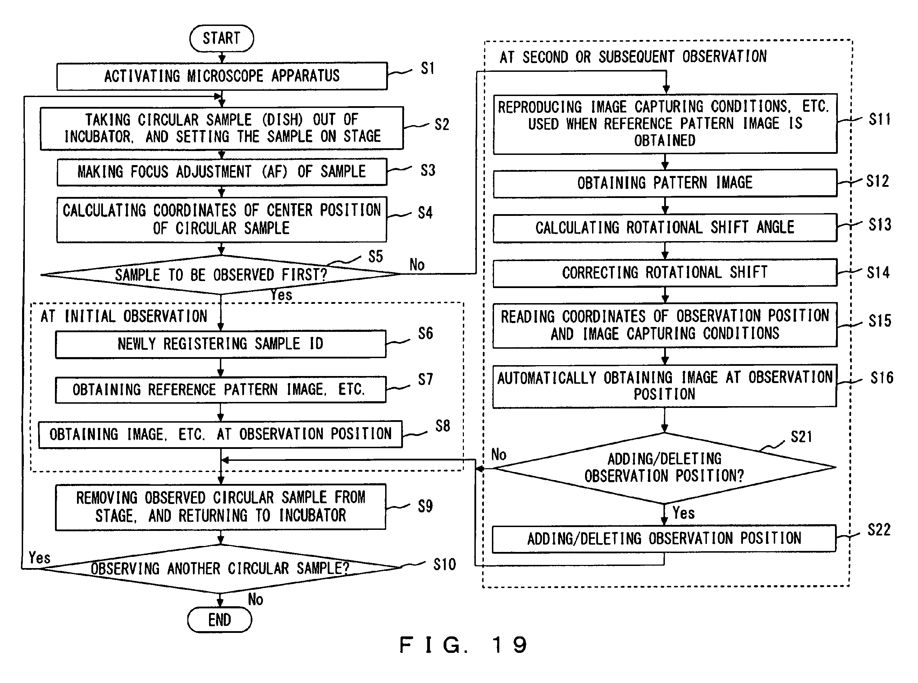

FIG. 19 is a flowchart illustrating operations according to this modification example.

As illustrated in this figure, the operations according to this modification example further include S21 and S22 between S16 and S9.

In S21, whether either to add or to delete an observation position is determined. This determination is performed under the control of the control unit 200, for example, by causing a dialog for inquiring of a user about whether either to add or to delete an observation position to be displayed on the display unit 300, and by causing the user to select "YES" or "NO" in the dialog via the input unit 400. If the user selects "YES", the determination results in "YES" and the flow goes to S22. If the user selects "NO", the determination results in "NO" and the flow goes to S9.

In S22, the observation position is added or deleted. This addition/deletion is performed under the control of the control unit 200, for example, by displaying a dialog for inquiring of the user about whether either to add or to delete the observation position to be displayed on the display unit 300, and by causing the user to select "ADD" or "DELETE" in the dialog via the input unit 400.

If the user selects "ADD", an image is obtained at the added observation position, and coordinates of the observation position, image capturing conditions and the like used when the image is obtained are obtained similarly to S8 under the control of the control unit 200. As a result, an image and the like also for the observation position added here can be automatically obtained at subsequent observations.

If the user selects "DELETE", an observation position to be deleted is selected under the control of the control unit 200. This is performed by causing the user to select a flag icon of the observation position to be deleted from among flag icons displayed in the entire map image area 350 on the GUI screen via the input unit 400. When the observation position to be deleted is selected in this way, the selected observation position is invalidated, and its image and the like are not automatically obtained at subsequent observations.

As described above, according to this modification example, a user can easily add or delete an observation position at the second or subsequent observation.

The microscope apparatus according to this embodiment can be modified, for example, as follows as a modification example 4.

In this modification example, processes are executed by excluding an area (also referred to as an unnecessary pattern area) of a portion, not obtained from the circular sample 103, from the pattern image obtained in S12 in S13 of FIG. 2. As a result, the area of the portion, not obtained from the circular sample 103, is not detected as a focused area when the focused area (see FIG. 16) is detected from the pattern image in S13. The area of the portion, not obtained from the circular sample 103, is, for example, an area of a portion caused by an influence of dust in an optical system or a pixel fault or the like of the image capturing unit 106.

With operations according to this modification example, in S13, before a focused area is detected from a pattern image, the XYZ θ electric stage 104 is initially rotated in the θ direction under the control of the control unit 200 while a live image of the circular sample 103 is being captured by the image capturing unit 106. At this time, an area that does not rotate with the rotation of the XYZ θ electric stage 104 is detected from the live image, and the detected area is recognized as an area of a portion that is not obtained from the circular sample 103.

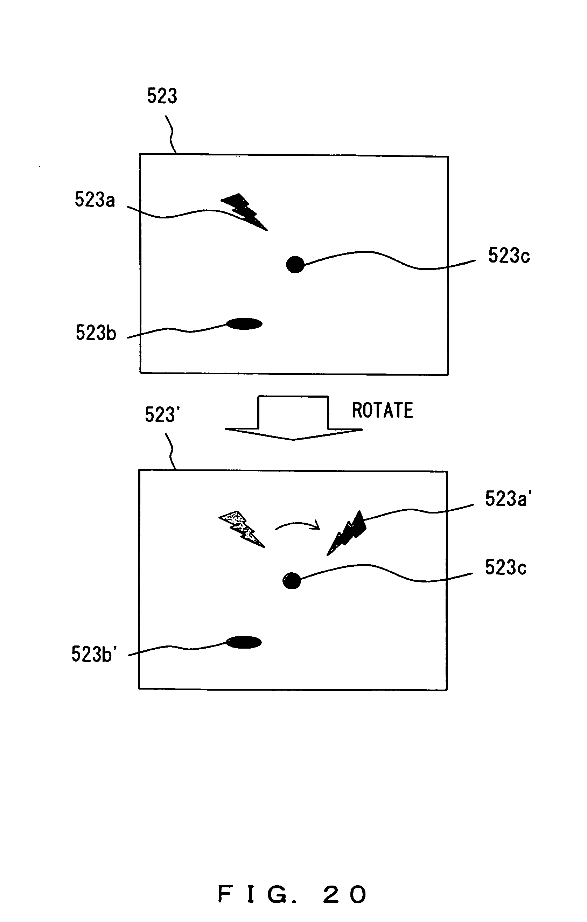

FIG. 20 is an explanatory view of the area detection performed in this way.

An image 523 illustrated on the upper side of this figure is a live image of the circular sample 103, which is captured by the image capturing unit 106 before the XYZ θ electric stage 104 is rotated. The live image 523 is assumed to include a partial area 523a corresponding to a portion of the circular sample 103, and a partial area 523b that is an area where an image of dust in the optical system is captured.

The position of the XYZ θ electric stage 104, the image capturing conditions, and the like when this live image 523 is captured are the same as those when the pattern image is obtained in S12 of FIG. 2, and a center position 523c of the live image 523 corresponds to the center position of the circular sample 103.

An image 523' illustrated on the lower side of FIG. 20 is a live image of the circular sample 103, which is captured by the image capturing unit 106 after the XYZ θ electric stage 104 is rotated. Here, partial areas 523a' and 523b' within the live image 523' are the two partial areas 523a and 523b after the XYZ θ electric stage 104 is rotated.

As described above, the partial area 523a corresponding to the portion of the circular sample 103 rotates with the rotation of the XYZ θ electric stage 104, whereas the partial area 523b that is the area where the image of the dust in the optical system is captured does not rotate with the rotation of the XYZ θ electric stage 104. Accordingly, in such a case, the partial area 523 is detected as an area that does not rotate with the rotation of the XYZ θ stage 104, and this area is recognized as an area of a portion that is not obtained from the circular sample 103.

When the area that does not rotate with the rotation of the XYZ θ electric stage 104 is recognized as an area of a portion that is not obtained from the circular sample 103 in this way, the processes are executed by excluding this area from the pattern image when detecting a focused area. As a result, the area recognized as the area of the portion that is not obtained from the circular sample 103 is not detected as a focused area any more.

As described above, according to this modification example, a suitable area as a focused area can be detected from a pattern image without being exerted by an influence of dust in the optical system, a pixel flaw or the like of the image capturing unit 106.

In this modification example, the area recognized as the area of the portion that is not obtained from the circular sample 103 can be displayed, for example, in different color for the sake of quick identification when the image is thereafter displayed in the image display area 340 on the GUI screen.

Additionally, in this modification example, an area that does not rotate with the rotation of the XYZ θ electric stage 104 is detected. However, the image capturing unit 106 may be rotated instead of rotating the XYZ θ electric stage 104. In this case, for example, the configuration applied to the modification example 1 is combined, and the area that does not rotate with the rotation of the image capturing unit 106 is detected from a live image. As a result, at least an area caused by an influence of a pixel flaw of the image capturing unit 106 can be prevented from being detected as a focused area. Alternatively, a user may manually rotate a circular sample instead of rotating the XYZ θ electric stage 104. In this case, an area that does not rotate with the user manual rotation of the circular sample is detected from a live image.

Furthermore, the microscope apparatus according to this embodiment can be modified, for example, as follows as a modification example 5.

In S13 of FIG. 2, pattern matching is performed by detecting the focused area (522b of FIG. 16), which is detected from the pattern image (522a of FIG. 16), from the reference pattern image (521a of FIG. 16) as described with reference to FIG. 16. In contrast, in this modification example, pattern matching is performed by detecting a pattern image itself from a reference pattern image.

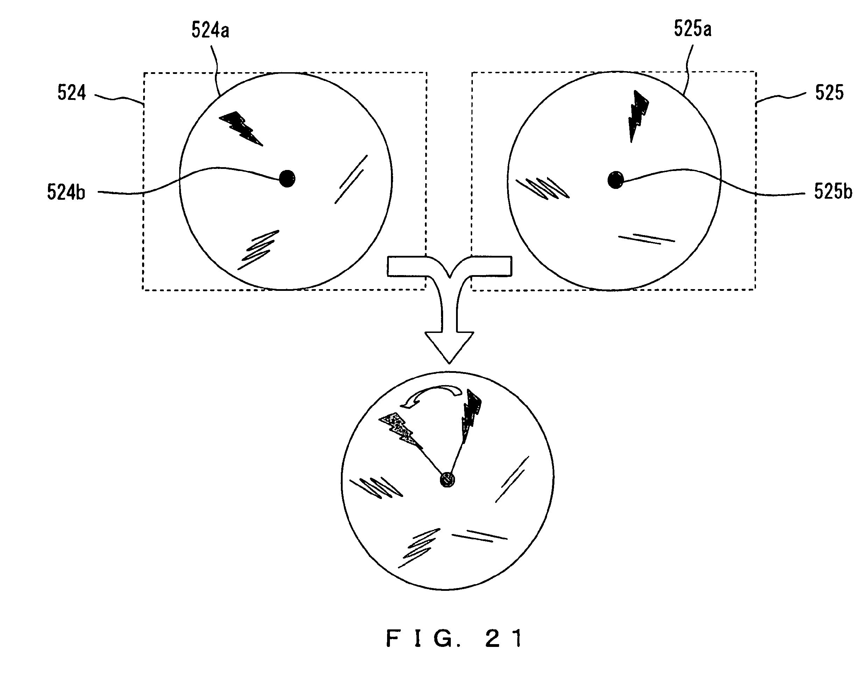

FIG. 21 illustrates an example of calculating a rotational shift angle with the pattern matching according to this modification example.

The example illustrated in this figure is a simple calculation example of calculating the rotational shift angle by performing pattern matching with a method for detecting a pattern image 525a from a reference pattern image 524a.

In this figure, an image 524 represents an image of the bottom surface of the circular sample 103 including the reference pattern image 524a when the above described S7 is executed at the first observation for the circular sample 103 set on the XYZ θ electric stage 104. Moreover, a point 524b represents the center position (also the center position of the image 524) of the reference pattern image 524a.

Additionally, an image 525 represents an image of the bottom surface of the circular sample 103 including the pattern image 525a when the above described S12 is executed for the circular sample 103 set on the XYZ θ electric stage 104. Moreover, a point 525b represents the center position (also the center position of the image 525) of the pattern image 525a.

Detection of the pattern image 525a from the reference pattern image 524a is performed, for example, as follows. The detection is performed by rotating the pattern image 525a about the center position 525b, and by detecting that all character points (such as edge coordinates and the like) of the pattern image 525a match the reference pattern image 524a.

Then, a rotational angle when all the character points match are detected is calculated as a rotational shift angle between the reference pattern image 524a and the pattern image 525a.

As described above, according to this modification example, the number of characteristic points compared between a reference pattern image and a pattern image increases, whereby pattern matching with higher accuracy can be performed, and a more accurate rotational shift angle can be calculated.

Additionally, the above described modification examples 1 to 5 can be combined and applied in the microscope apparatus according to this embodiment.

Furthermore, in the microscope apparatus according to this embodiment, a culture dish of a biological system is used as the circular sample 103. However, for example, a disc, a circular substrate or the like of an industrial system can be used.

Still further, in the microscope apparatus according to this embodiment, a microscope such as a digital microscope, a time lapse observation microscope or the like is applicable as the microscope 100.

Up to this point, the embodiment according to the present invention has been described. However, the present invention is not limited to the above described embodiment, and various improvements and modifications can be performed. The scope of the present invention is defined by the appended claims.

As described above, according to the present invention, an observation position of a circular sample can be reproduced with high accuracy.

## Claims

1. A microscope apparatus, comprising:
an image capturing unit (106) for capturing an observation image;
a center position calculation unit (201) for calculating coordinates of a center position of a circular sample based on the image of the circular sample, which is obtained by the image capturing unit (106);
a recognition unit (202) for recognizing a pattern image of a predetermined area based on the coordinates of the center position, which are calculated by the center position calculation unit (201), from the image of the circular sample, which is obtained by the image capturing unit (106);
a storage unit (203) for storing the pattern image recognized by the recognition unit (202);
a rotational shift angle calculation unit (204) for calculating a rotational shift angle between a first pattern image recognized by the recognition unit (202) from an image of the circular sample, which is obtained by the image capturing unit (106) in a first period, and a second pattern image recognized by the recognition unit (202) from an image of the circular sample, which is obtained by the image capturing unit (106) in a second period later than the first period; and
a position reproduction unit (205) for correcting a rotational shift of the circular sample based on the rotational shift angle calculated by the rotational shift angle calculation unit (204), and for reproducing a position of the circular sample in the first period.

2. The microscope apparatus according to claim 1, wherein
the center position calculation unit (201) detects a plurality of edge points of the circular sample from the image of the circular sample, which is obtained by the image capturing unit (106), and calculates the coordinates of the center position of the circular sample based on the plurality of edge points.

3. The microscope apparatus according to claim 1, wherein
the center position calculation unit (201) calculates the coordinates of the center position of the circular sample based on a plurality of edge points of the circular sample, which are obtained with a manual operation from the image of the circular sample, which is obtained by the image capturing unit (106).

4. The microscope apparatus according to claim 2, wherein
the center position calculation unit (201) makes an arc approximation by using the plurality of edge points, and calculates the coordinates of the center position of the circular sample.

5. The microscope apparatus according to claim 1, wherein
the rotational shift angle calculation unit (204) calculates a rotational shift angle between the first pattern image and the second pattern image by performing pattern matching.

6. The microscope apparatus according to claim 1, wherein
the rotational shift angle calculation unit (204) detects a pattern image of a particular area from the second pattern image under a predetermined condition, rotates the pattern image of the particular area about an image center of the second pattern image as a rotational center, and calculates the rotational shift angle between the first pattern image and the second pattern image from a rotational angle of the pattern image of the particular area when a same pattern image as the pattern image of the particular area is detected from the first pattern image.

7. The microscope apparatus according to claim 1, wherein
the predetermined area is determined based on an image capturing area of the image capturing unit (106), and the coordinates of the center position, which are calculated by the center position calculation unit (201).

8. The microscope apparatus according to claim 1, wherein
the position reproduction unit (205) corrects the rotational shift of the circular sample by rotating the circular sample with the use of the coordinates of the center position, which are calculated by the center position calculation unit (201), as an origin based on the rotational shift angle calculated by the rotational shift angle calculation unit (204), and reproduces the position of the circular sample in the first period.

9. The microscope apparatus according to claim 1, further comprising
a rotation unit (110) for rotating the image capturing unit (106), wherein
the position reproduction unit (205) corrects the rotational shift of the circular sample by causing the rotation unit (110) to rotate the image capturing unit (106) based on the rotational shift angle calculated by the rotational shift angle calculation unit (204), and reproduces the position of the circular sample in the first period.

10. The microscope apparatus according to claim 1, further comprising
a display image rotation unit (209) for rotating an image displayed on a display unit (300), wherein
the position reproduction unit (205) corrects the rotational shift of the circular sample by causing the display image rotation unit (209) to rotate the image displayed on the display unit (300) based on the rotational shift angle calculated by the rotational shift angle calculation unit (204), and reproduces the position of the circular sample in the first period.

11. The microscope apparatus according to claim 6, further comprising
an unnecessary pattern area detection unit (200) for detecting an unnecessary pattern area, caused by an influence of an optical system and/or the image capturing unit (106), from the image obtained by the image capturing unit (106), wherein
the rotational shift angle calculation unit (204) executes a process by excluding the unnecessary pattern area detected by the unnecessary pattern area detection unit (200) from the second pattern image when calculating the rotational shift angle between the first pattern image and the second pattern image.

12. The microscope apparatus according to claim 1, wherein
the first pattern image is recognized by the recognition unit (202) from an image of a bottom surface of the circular sample, which is obtained by the image capturing unit (106) in the first period, and
the second pattern image is recognized by the recognition unit (202) from an image of the bottom surface of the circular sample, which is obtained by the image capturing unit (106) in the second period.

13. An observation position reproduction method, comprising:
in a first period
capturing an image of a circular sample, calculating coordinates of a first center position of the circular sample based on the obtained image,
capturing an image of the circular image, and recognizing a first pattern image of a predetermined area from the obtained image based on the coordinates of the first center position of the circular sample; and
in a second period later than the first period
capturing an image of the circular sample, calculating coordinates of a second center position of the circular sample based on the obtained image,
capturing an image of the circular sample, recognizing a second pattern image of a predetermined area from the obtained image based on the coordinates of the second center position of the circular sample,
calculating a rotational shift angle between the first pattern image recognized in the first period and the second pattern image recognized in the second period,
correcting a rotational shift of the circular sample based on the rotational shift angle, and reproducing a position of the circular sample in the first period.

14. A computer-readable recording medium on which an observation position reproduction program for causing a computer to execute a method, the method comprising:
in a first period
capturing an image of a circular sample, calculating coordinates of a first center position of the circular sample based on the obtained image,
capturing an image of the circular image, and recognizing a first pattern image of a predetermined area from the obtained image based on the coordinates of the first center position of the circular sample; and
in a second period later than the first period
capturing an image of the circular sample, calculating coordinates of a second center position of the circular sample based on the obtained image,
capturing an image of the circular sample, recognizing a second pattern image of a predetermined area from the obtained image based on the coordinates of the second center position of the circular sample,
calculating a rotational shift angle between the first pattern image recognized in the first period and the second pattern image recognized in the second period,
correcting a rotational shift of the circular sample based on the rotational shift angle, and reproducing a position of the circular sample in the first period.

15. An observation position reproduction program for causing a computer to execute a method, the method comprising:
in a first period
capturing an image of a circular sample, calculating coordinates of a first center position of the circular sample based on the obtained image,
capturing an image of the circular image, and recognizing a first pattern image of a predetermined area from the obtained image based on the coordinates of the first center position of the circular sample; and
in a second period later than the first period
capturing an image of the circular sample, calculating coordinates of a second center position of the circular sample based on the obtained image,
capturing an image of the circular sample, recognizing a second pattern image of a predetermined area from the obtained image based on the coordinates of the second center position of the circular sample,
calculating a rotational shift angle between the first pattern image recognized in the first period and the second pattern image recognized in the second period,
correcting a rotational shift of the circular sample based on the rotational shift angle, and reproducing a position of the circular sample in the first period.

## Patentansprüche

1. Mikroskopgerät mit:
einer Bildaufnahmeeinheit (106) zum Aufnehmen eines Beobachtungsbilds;
eine Zentralpositions-Berechnungseinheit (201) zum Berechnen von Koordinaten einer Zentralposition einer kreisförmigen Probe basierend auf dem Bild der kreisförmigen Probe, das von der Bildaufnahmeeinheit (106) erstellt wird;
einer Erkennungseinheit (202) zum Erkennen eines Strukturbilds eines vorbestimmten Bereichs, basierend auf den Koordinaten der Zentralposition, die von der Zentralpositions-Berechnungseinheit (201) berechnet werden, aus dem Bild der kreisförmigen Probe, das von der Bildaufnahmeeinheit (106) erstellt wird;
einer Speichereinheit (203) zum Speichern des von der Erkennungseinheit (202) erkannten Strukturbilds;
einer Drehverschiebungswinkel-Berechnungseinheit (204) zum Berechnen eines Drehverschiebungswinkels zwischen einem ersten Strukturbild, das von der Erkennungseinheit (202) aus einem Bild der kreisförmigen Probe erkannt wird, welches von der Bildaufnahmeeinheit (106) in einer ersten Periode erstellt wird, und einem zweiten Strukturbild, das von der Erkennungseinheit (202) aus einem Bild der kreisförmigen Probe erkannt wird, welches von der Bildaufnahmeeinheit (106) in einer zweiten, späteren Periode als der ersten Periode erstellt wird; und
einer Positions-Reproduktionseinheit (205) zum Korrigieren einer Drehverschiebung der kreisförmigen Probe, basierend auf dem von der Drehverschiebungswinkel-Berechnungseinheit (204) berechneten Drehverschiebungswinkel, und zum Reproduzieren einer Position der kreisförmigen Probe in der ersten Periode.

2. Mikroskopgerät nach Anspruch 1, wobei
die Zentralpositions-Berechnungseinheit (201) mehrere Randpunkte der kreisförmigen Probe aus dem Bild der kreisförmigen Probe, das von der Bildaufnahmeeinheit (106) erstellt wird, erfasst und die Koordinaten der Zentralposition der kreisförmigen Probe basierend auf den mehreren Randpunkten berechnet.

3. Mikroskopgerät nach Anspruch 1, wobei
die Zentralpositions-Berechnungseinheit (201) die Koordinaten der Zentralposition der kreisförmigen Probe basierend auf den mehreren Randpunkten der kreisförmigen Probe berechnet, die mit einem manuellen Arbeitsgang aus dem Bild der kreisförmigen Probe, das von der Bildaufnahmeeinheit (106) erstellt wird, gewonnen werden.

4. Mikroskopgerät nach Anspruch 2, wobei
die Zentralpositions-Berechnungseinheit (201) eine Kreisbogenapproximation unter Verwendung der mehreren Randpunkte ausführt, und die Koordinaten der Zentralposition der kreisförmigen Probe berechnet.

5. Mikroskopgerät nach Anspruch 1, wobei
die Drehverschiebungswinkel-Berechnungseinheit (204) einen Drehverschiebungswinkel zwischen dem ersten Strukturbild und dem zweiten Strukturbild durch Ausführen eines Strukturabgleichs berechnet.

6. Mikroskopgerät nach Anspruch 1, wobei
die Drehverschiebungswinkel-Berechnungseinheit (204) ein Strukturbild eines bestimmten Bereichs aus dem zweiten Strukturbild unter einer vorbestimmten Bedingung erfasst, das Strukturbild des bestimmten Bereichs um ein Bildzentrum des zweiten Strukturbilds als Drehzentrum dreht und den Drehverschiebungswinkel zwischen dem ersten Strukturbild und dem zweiten Strukturbild aus einem Drehwinkel des Strukturbilds des bestimmten Bereichs berechnet, wenn ein gleiches Strukturbild wie das Strukturbild des bestimmten Bereichs aus dem ersten Strukturbild erfasst wird.

7. Mikroskopgerät nach Anspruch 1, wobei
der vorbestimmte Bereich auf der Basis eines Bildaufnahmebereichs der Bildaufnahmeeinheit (106) und den Koordinaten der Zentralposition, die von der Zentralpositions-Berechnungseinheit (201) berechnet werden, bestimmt wird.

8. Mikroskopgerät nach Anspruch 1, wobei
die Positions-Reproduktionseinheit (205) die Drehverschiebung der kreisförmigen Probe durch Drehen der kreisförmigen Probe unter Anwendung der von der Zentralpositions-Berechnungseinheit (201) berechneten Koordinaten der Zentralposition als Ursprung, basierend auf dem von der Drehverschiebungswinkel-Berechnungseinheit (204) berechneten Drehverschiebungswinkel, korrigiert und die Position der kreisförmigen Probe in der ersten Periode reproduziert.

9. Mikroskopgerät nach Anspruch 1, ferner mit
einer Dreheinheit (110) zum Drehen der Bildaufnahmeeinheit (106), wobei
die Positions-Reproduktionseinheit (205) die Drehverschiebung der kreisförmigen Probe korrigiert, indem sie die Dreheinheit (110) veranlasst, die Bildaufnahmeeinheit (106) basierend auf dem von der Drehverschiebungswinkel-Berechnungseinheit (204) berechneten Drehverschiebungswinkel zu drehen, und die Position der kreisförmigen Probe in der ersten Periode reproduziert.

10. Mikroskopgerät nach Anspruch 1, ferner mit
einer Anzeigebild-Dreheinheit (209) zum Drehen eines an einer Anzeigeeinheit (300) angezeigten Bilds, wobei
die Positions-Reproduktionseinheit (205) die Drehverschiebung der kreisförmigen Probe korrigiert, indem sie die Anzeigebild-Dreheinheit (209) veranlasst, das an der Anzeigeeinheit (300) angezeigte Bild basierend auf dem von der Drehverschiebungswinkel-Berechnungseinheit (204) berechneten Drehverschiebungswinkel zu drehen, und die Position der kreisförmigen Probe in der ersten Periode reproduziert.

11. Mikroskopgerät nach Anspruch 6, ferner mit
einer Erfassungseinheit (200) zum Erfassen eines überflüssigen Strukturbereichs, der durch einen Einfluss eines optischen Systems und/oder die Bildaufnahmeeinheit (106) verursacht wird, aus dem durch die Bildaufnahmeeinheit (106) erstellten Bild, wobei
die Drehverschiebungswinkel-Berechnungseinheit (204) einen Prozess ausführt, indem sie den von der Erfassungseinheit (200) zum Erfassen eines überflüssigen Strukturbereichs erfassten überflüssigen Strukturbereich aus dem zweiten Strukturbild ausschließt, wenn sie den Drehverschiebungswinkel zwischen dem ersten Strukturbild und dem zweiten Strukturbild berechnet.

12. Mikroskopgerät nach Anspruch 1, wobei
das erste Strukturbild von der Erkennungseinheit (202) aus einem Bild einer Bodenfläche der kreisförmigen Probe, das durch die Bildaufnahmeeinheit (106) in der ersten Periode erstellt wird, erkannt wird, und
das zweite Strukturbild von der Erkennungseinheit (202) aus einem Bild einer Bodenfläche der kreisförmigen Probe, das durch die Bildaufnahmeeinheit (106) in der zweiten Periode erstellt wird, erkannt wird.

13. Beobachtungspositions-Reproduktionsverfahren, umfassend:
in einer ersten Periode
Aufnehmen eines Bilds einer kreisförmigen Probe, Berechnen von Koordinaten einer ersten Zentrumsposition der kreisförmigen Probe basierend auf dem erstellten Bild,
Aufnehmen eines Bilds des kreisförmigen Bilds, und Erkennen eines ersten Strukturbilds eines vorbestimmten Bereichs aus dem erstellten Bild, basierend auf den Koordinaten der ersten Zentrumsposition der kreisförmigen Probe; und
in einer zweiten, späteren Periode als der ersten Periode,
Aufnehmen eines Bilds der kreisförmigen Probe, Berechnen von Koordinaten einer zweiten Zentrumsposition der kreisförmigen Probe basierend auf dem erstellten Bild,
Aufnehmen eines Bilds der kreisförmigen Probe, Erkennen eines zweiten Strukturbilds eines vorbestimmten Bereichs aus dem erstellten Bild, basierend auf den Koordinaten der zweiten Zentrumsposition der kreisförmigen Probe,
Berechnen eines Drehverschiebungswinkels zwischen dem in der ersten Periode erkannten ersten Strukturbild und dem in der zweiten Periode erkannten zweiten Strukturbild,
Korrigieren einer Drehverschiebung der kreisförmigen Probe basierend auf dem Drehverschiebungswinkel, und Reproduzieren einer Position der kreisförmigen Probe in der ersten Periode.

14. Computerlesbares Aufzeichnungsmedium, auf dem sich ein Beobachtungspositions-Reproduktionsprogramm befindet, das einen Computer veranlasst, ein Verfahren auszuführen, wobei das Verfahren umfasst:
in einer ersten Periode
Aufnehmen eines Bilds einer kreisförmigen Probe, Berechnen von Koordinaten einer ersten Zentrumsposition der kreisförmigen Probe basierend auf dem erstellten Bild,
Aufnehmen eines Bilds des kreisförmigen Bilds, und Erkennen eines ersten Strukturbilds eines vorbestimmten Bereichs aus dem erstellten Bild, basierend auf den Koordinaten der ersten Zentrumsposition der kreisförmigen Probe; und
in einer zweiten, späteren Periode als der ersten Periode,
Aufnehmen eines Bilds der kreisförmigen Probe, Berechnen von Koordinaten einer zweiten Zentrumsposition der kreisförmigen Probe basierend auf dem erstellten Bild,
Aufnehmen eines Bilds der kreisförmigen Probe, Erkennen eines zweiten Strukturbilds eines vorbestimmten Bereichs aus dem erstellten Bild, basierend auf den Koordinaten der zweiten Zentrumsposition der kreisförmigen Probe,
Berechnen eines Drehverschiebungswinkels zwischen dem in der ersten Periode erkannten ersten Strukturbild und dem in der zweiten Periode erkannten zweiten Strukturbild,
Korrigieren einer Drehverschiebung der kreisförmigen Probe, basierend auf dem Drehverschiebungswinkel, und Reproduzieren einer Position der kreisförmigen Probe in der ersten Periode.

15. Beobachtungspositions-Reproduktionsprogramm, das einen Computer veranlasst, ein Verfahren auszuführen, wobei das Verfahren umfasst:
in einer ersten Periode
Aufnehmen eines Bilds einer kreisförmigen Probe, Berechnen von Koordinaten einer ersten Zentrumsposition der kreisförmigen Probe basierend auf dem erstellten Bild,
Aufnehmen eines Bilds des kreisförmigen Bilds, und Erkennen eines ersten Strukturbilds eines vorbestimmten Bereichs aus dem erstellten Bild, basierend auf den Koordinaten der ersten Zentrumsposition der kreisförmigen Probe; und
in einer zweiten, späteren Periode als der ersten Periode
Aufnehmen eines Bilds der kreisförmigen Probe, Berechnen von Koordinaten einer zweiten Zentrumsposition der kreisförmigen Probe basierend auf dem erstellten Bild,
Aufnehmen eines Bilds der kreisförmigen Probe, Erkennen eines zweiten Strukturbilds eines vorbestimmten Bereichs aus dem erstellten Bild, basierend auf den Koordinaten der zweiten Zentrumsposition der kreisförmigen Probe,
Berechnen eines Drehverschiebungswinkels zwischen dem in der ersten Periode erkannten ersten Strukturbild und dem in der zweiten Periode erkannten zweiten Strukturbild,
Korrigieren einer Drehverschiebung der kreisförmigen Probe, basierend auf dem Drehverschiebungswinkel, und Reproduzieren einer Position der kreisförmigen Probe in der ersten Periode.

## Revendications

1. Appareil de microscope, comprenant :
une unité de capture d'image (106) destinée à capturer une image d'observation ;
une unité de calcul de position centrale (201) destinée à calculer les coordonnées d'une position centrale d'un échantillon circulaire sur la base de l'image de l'échantillon circulaire, qui est obtenue par l'unité de capture d'image (106) ;
une unité de reconnaissance (202) destinée à reconnaître une image de structures d'une zone prédéterminée sur la base des coordonnées de la position centrale, qui sont calculées par l'unité de calcul de position centrale (201), à partir de l'image de l'échantillon circulaire, qui est obtenue par l'unité de capture d'image (106) ;
unité de mémorisation (203) destinée à mémoriser les images de structure reconnues par l'unité de reconnaissance (202) ;
une unité de calcul d'angle de décalage en rotation (204) destinée à calculer un angle de décalage en rotation entre une première image de structure reconnue par l'unité de reconnaissance (202) à partir d'une image de l'échantillon circulaire, qui est obtenue par l'unité de capture d'image (106) dans une première période, et une deuxième image de structure reconnue par l'unité de reconnaissance (202) à partir d'une image de l'échantillon circulaire, qui est obtenue par l'unité de capture d'image (106) dans une deuxième période postérieure à la première période ; et
une unité de reproduction de position (205) destinée à corriger un décalage en rotation de l'échantillon circulaire sur la base de l'angle de décalage en rotation calculé par l'unité de calcul d'angle de décalage en rotation (204), et destinée à reproduire une position de l'échantillon circulaire dans la première période.

2. Appareil de microscope selon la revendication 1, dans lequel
l'unité de calcul de position centrale (201) détecte une pluralité de points de bordure de l'échantillon circulaire à partir de l'image de l'échantillon circulaire, qui est obtenue par l'unité de capture d'image (106), et calcule les coordonnées de la position centrale de l'échantillon circulaire sur la base de la pluralité de points de bordure.

3. Appareil de microscope selon la revendication 1, dans lequel
l'unité de calcul de position centrale (201) calcule les coordonnées de la position centrale de l'échantillon circulaire sur la base d'une pluralité de points de bordure de l'échantillon circulaire, qui sont obtenus avec une opération manuelle à partir de l'image de l'échantillon circulaire, qui est obtenue par l'unité de capture d'image (106).

4. Appareil de microscope selon la revendication 2, dans lequel
l'unité de calcul de position centrale (201) effectue une approximation circulaire en utilisant la pluralité de points de bordure, et calcule les coordonnées de la position centrale de l'échantillon circulaire.

5. Appareil de microscope selon la revendication 1, dans lequel
l'unité de calcul d'angle de décalage en rotation (204) calcule un angle de décalage en rotation entre la première image de structure et la deuxième image de structure en exécutant un appariement de structures.

6. Appareil de microscope selon la revendication 1, dans lequel
l'unité de calcul d'angle de décalage en rotation (204) détecte une image de structure d'une zone particulière à partir de la deuxième image de structure sous une condition prédéterminée, fait tourner l'image de structure de la zone particulière autour d'un centre d'image de la deuxième image de structure en tant que centre de rotation, et calcule l'angle de décalage en rotation entre la première image de structure et la deuxième image de structure à partir d'un angle rotationnel de l'image de structure de la zone particulière lorsqu'une image de structure identique à l'image de structure de la zone particulière est détectée à partir de la première image de structure.

7. Appareil de microscope selon la revendication 1, dans lequel
la zone prédéterminée est déterminée sur la base d'une zone de capture d'image de l'unité de capture d'image (106), et des coordonnées de la position centrale, qui sont calculées par l'unité de calcul de position centrale (201).

8. Appareil de microscope selon la revendication 1, dans lequel
l'unité de reproduction de position (205) corrige le décalage en rotation de l'échantillon circulaire en faisant tourner l'échantillon circulaire en utilisant les coordonnées de la position centrale, qui sont calculées par l'unité de calcul de position centrale (201), en tant qu'origine sur la base de l'angle de décalage en rotation calculé par l'unité de calcul d'angle de décalage en rotation (204), et reproduit la position de l'échantillon circulaire dans la première période.

9. Appareil de microscope selon la revendication 1, comprenant en outre une unité de rotation (110) destinée à faire tourner l'unité de capture d'image (106), dans lequel
l'unité de reproduction de position (205) corrige le décalage en rotation de l'échantillon circulaire en amenant l'unité de rotation (110) à faire tourner l'unité de capture d'image (106) sur la base de l'angle de décalage en rotation calculé par l'unité de calcul d'angle de décalage en rotation (204), et reproduit la position de l'échantillon circulaire dans la première période.

10. Appareil de microscope selon la revendication 1, comprenant en outre
une unité de rotation d'image d'affichage (209) destinée à faire tourner une image affichée sur une unité d'affichage (300), dans lequel
l'unité de reproduction de position (205) corrige le décalage en rotation de l'échantillon circulaire en amenant l'unité de rotation d'image d'affichage (209) à faire tourner l'image affichée sur l'unité d'affichage (300) sur la base de l'angle de décalage en rotation calculé par l'unité de calcul d'angle de décalage en rotation (204), et reproduit la position de l'échantillon circulaire dans la première période.

11. Appareil de microscope selon la revendication 6, comprenant en outre
une unité de détection de zone de structure non nécessaire (200) destinée à détecter une zone de structure non nécessaire, provoquée par une influence d'un système optique et/ou de l'unité de capture d'image (106), à partir de l'image obtenue par l'unité de capture d'image (106), dans lequel
l'unité de calcul d'angle de décalage en rotation (204) exécute un processus en excluant la zone de structure non nécessaire détectée par l'unité de détection de zone de structure non nécessaire (200) à partir de la deuxième image de structure lors du calcul de l'angle de décalage en rotation entre la première image de structure et la deuxiéme image de structure.

12. Appareil de microscope selon la revendication 1, dans lequel
la première image de structure est reconnue par l'unité de reconnaissance (202) à partir d'une image d'une surface de fond de l'échantillon circulaire, qui est obtenue par l'unité de capture d'image (106) dans la première période, et
la deuxième image de structure est reconnue par l'unité de reconnaissance (202) à partir d'une image de la surface de fond de l'échantillon circulaire, qui est obtenue par l'unité de capture d'image (106) dans la deuxième période.

13. Procédé de reproduction de la position d'observation, comprenant les étapes consistant à :
dans une première période
capturer une image d'un échantillon circulaire, calculer les coordonnées d'une première position centrale de l'échantillon circulaire sur la base de l'image obtenue,
capturer une image de l'image circulaire, et reconnaître une première image de structure d'une zone prédéterminée à partir de l'image obtenue sur la base des coordonnées de la première position centrale de l'échantillon circulaire ; et
dans une deuxième période postérieure à la première période
capturer une image de l'échantillon circulaire, calculer les coordonnées d'une deuxième position centrale de l'échantillon circulaire sur la base de l'image obtenue,
capturer une image de l'échantillon circulaire, reconnaître une deuxième image de structure d'une zone prédéterminée à partir de l'image obtenue sur la base des coordonnées de la deuxième position centrale de l'échantillon circulaire,
calculer un angle de décalage en rotation entre la première image de structure reconnue dans la première période et la deuxième image de structure reconnue dans la deuxième période,
corriger un décalage en rotation de l'échantillon circulaire sur la base de l'angle de décalage en rotation, et reproduire une position de l'échantillon circulaire dans la première période.

14. Support d'enregistrement lisible sur un ordinateur sur lequel un programme de reproduction de position d'observation est destiné à amener un ordinateur à exécuter un procédé, le procédé comprenant les étapes consistant à :
dans la première période
capturer une image d'un échantillon circulaire, calculer les coordonnées d'une première position centrale de l'échantillon circulaire sur la base de l'image obtenue,
capturer une image de l'image circulaire, et reconnaître une première image de structure d'une zone prédéterminée à partir de l'image obtenue sur la base des coordonnées de la première position centrale de l'échantillon circulaire ; et
dans une deuxième période postérieure à la première période
capturer une image de l'échantillon circulaire, calculer les coordonnées d'une deuxième position centrale de l'échantillon circulaire sur la base de l'image obtenue,
capturer une image de l'échantillon circulaire, reconnaître une deuxième image de structure d'une zone prédéterminée à partir de l'image obtenue sur la base des coordonnées de la deuxième position centrale de l'échantillon circulaire,
calculer un angle de décalage en rotation entre la première image de structure reconnue dans la première période et la deuxième image de structure reconnue dans la deuxième période,
corriger un décalage en rotation de l'échantillon circulaire sur la base de l'angle de décalage en rotation, et reproduire une position de l'échantillon circulaire dans la première période.

15. Programme de reproduction d'une position d'observation destiné à amener un ordinateur à exécuter un procédé, le procédé comprenant les étapes consistant à :
dans la première période
capturer une image d'un échantillon circulaire, calculer les coordonnées d'une première position centrale de l'échantillon circulaire sur la base de l'image obtenue,
capturer une image de l'image circulaire, et reconnaître une première image de structure d'une zone prédéterminée à partir de l'image obtenue sur la base des coordonnées de la première position centrale de l'échantillon circulaire ; et
dans une deuxième période postérieure à la première période
capturer une image de l'échantillon circulaire, calculer les coordonnées d'une deuxième position centrale de l'échantillon circulaire sur la base de l'image obtenue,
capturer une image de l'échantillon circulaire, reconnaître une deuxième image de structure d'une zone prédéterminée à partir de l'image obtenue sur la base des coordonnées de la deuxième position centrale de l'échantillon circulaire,
calculer un angle de décalage en rotation entre la première image de structure reconnue dans la première période et la deuxième image de structure reconnue dans la deuxième période,
corriger un décalage en rotation de l'échantillon circulaire sur la base de l'angle de décalage en rotation, et reproduire une position de l'échantillon circulaire dans la première période.
